# EUROPÄISCHE PATENTSCHRIFT

(11) **EP 3 545 391 B1**
(45) Veröffentlichungstag und Bekanntmachung des Hinweises auf die Patenterteilung: **30.12.2020**
(21) Anmeldenummer: 17822117.2
(22) Anmeldetag: 22.11.2017
(51) Int. Cl.: G06F 3/0362

(54) **BEDIENELEMENT FÜR EINE ELEKTRISCH GESTEUERTE MASCHINE**
OPERATING ELEMENT FOR AN ELECTRICALLY CONTROLLED MACHINE
ÉLÉMENT DE COMMANDE POUR UNE MACHINE À COMMANDE ÉLECTRIQUE

(30) Priorität: 23.11.2016 AT 510632016; 31.08.2017 AT 507322017
(43) Veröffentlichungstag der Anmeldung: 02.10.2019
(73) Patentinhaber: KEBA AG, 4041 Linz (AT)
(72) Erfinder: FISCHER, Harald, 5323 Ebenau (AT); HACKL, Benjamin, 4020 Linz (AT); MAHR, Wolfgang, 4040 Steyregg (AT)
(74) Vertreter: Burger, Hannes
(86) Internationale Anmeldenummer: PCT/AT2017/060311
(87) Internationale Veröffentlichungsnummer: WO 2018/094437

(56) Entgegenhaltungen:
- EP-A1- 0 644 566
- DE-A1- 19 936 257
- GB-A- 2 361 292
- US-A1- 2012 055 763

## Beschreibung

Die Erfindung betrifft ein Bedienelement für die Eingabe eines Befehls in die Steuerung einer elektrisch gesteuerten. Maschine und ein entsprechendes Verfahren zur Eingabe eines Befehls.

Aus der AT 512 521 B1 ist eine Bedieneinheit für eine Spritzgießmaschine bekannt. Die Bedieneinheit weist ein Bedienelement zum Auslösen zumindest einer Bewegung einer Antriebseinheit der Spritzgießmaschine auf, wobei das Bedienelement von einer Grundstellung in einen die Bewegung der Antriebseinheit auslösenden Auslösebereich bewegbar ist. Der Auslösebereich weist eine Vielzahl von Zwischenstellungen zwischen der Grundstellung und einer Maximalstellung auf. Die Geschwindigkeit der ausgelösten Bewegung der Antriebseinheit ist abhängig von der Entfernung der gewählten Zwischenstellung des Bedienelements von der Grundstellung. Durch das Bedienelement sind Bewegungen mehrerer Antriebseinheiten auslösbar, wobei durch Drücken, Ziehen, Schwenken usw. des Bedienelements ein Wechsel der durch das Bedienelement angesteuerten Antriebseinheiten erfolgt.

Die aus der AT 512 521 B1 bekannte Bedieneinheit weist den Nachteil auf, dass ein Bedienelement, welches Befehle durch Drücken, Ziehen, Schwenken usw. ausführt eine entsprechende mechanische Kopplung zu einem Schalter aufweisen muss. Eine derartige Kopplung ist fehleranfällig und teuer. Darüber hinaus ist eine derartige Kopplung beispielsweise in explosionsgeschützten Bereichen schwierig zu realisieren.

Die DE 19936257 A1 offenbart einen Mehrfachdrehknopf zur An- und Auswahl aus dem Funktionsangebot eines technischen Systems. Der Mehrfachdrehknopf weist dabei mehrere berührungssensitive Drehknöpfe bzw. mehrere, durch stufenförmige Übergänge getrennte Zonen, auf. Die Einzeldrehknöpfe bzw. Zonen sind konzentrisch in verschiedenen Radien von der Drehachse ausgebildet und können taktil und farblich unterscheidbar sein. Die Auswahl einer Funktion erfolgt über die Rotation eines oder mehrerer Drehknöpfe, wobei die Bestätigung die Ausübung einer Kraft in Radial- und/oder Axialrichtung auf den axial verschieblichen Mehrfachdrehknopf erfordert.

Die GB 2361292 A offenbart einen Drehknopf, welcher zumindest zwei Zonen mit unterschiedlicher elektrischer Leitfähigkeit aufweist. Eine der Zonen muss dabei metallisch leitend und direkt verbunden mit dem Schaft des Drehknopfs ausgebildet sein, während die zweite oder eine weitere Zone aus einem elektrischen Isolator bestehend vom Schaft des Dreh-knopfs isoliert ausgebildet sein muss. Es können unterschiedliche Funktionen von einem Benutzer durch Berührung der entsprechenden Zone ausgewählt werden.

Aufgabe der vorliegenden Erfindung war es, die Nachteile des Standes der Technik zu überwinden und ein verbessertes Bedienelement zur Verfügung zu stellen. Darüber hinaus war es die Aufgabe der Erfindung ein verbessertes Verfahren zur Eingabe eines Befehls in die Steuerung der elektrisch gesteuerten Maschine zur Verfügung zu stellen.

Diese Aufgabe wird durch ein Bedienelement gemäß den Ansprüchen gelöst.

Die Erfindung wird definiert durch das Bedienelement gemäß unabhängigem Anspruch 1 und das Verfahren gemäß unabhängigem Anspruch 15. Erfindungsgemäß ist ein Bedienelement für eine elektrisch gesteuerte Maschine, mit einem Bedienelementkörper und einem Drehrad zum Eingeben eines Befehls in eine Steuerung der Maschine, wobei das Drehrad um eine Rotationsachse drehbar am Bedienelementkörper angeordnet ist und von einer Mantelfläche umgeben ist, welche einen lokalen in Normalrichtung auf die Rotationsachse vorgegebenen Durchmessermittelwert aufweist, an welcher Mantelfläche das Drehrad von einem Maschinenbediener ergreif- und verdrehbar ist, wobei die Mantelfläche des Drehrades zumindest zwei Betätigungsabschnitte mit jeweils unterschiedlichen, haptisch unterscheidbaren Oberflächenstrukturierungen aufweist, wobei zumindest einem der Betätigungsabschnitte ein Sensorbereich eines Sensorelements zugeordnet ist, welcher Sensorbereich zur Detektierung des Vorhandenseins und/oder Nicht-Vorhandenseins einer Berührung durch einen Maschinenbediener vorgesehen bzw. ausgebildet ist, und wobei zumindest einem der Betätigungsabschnitte unterschiedliche Maschinenfunktionen, insbesondere Bewegungssteuerbefehle, zur Eingabe von zumindest einem Befehl in die Steuerung zugeordnet sind, und wobei die zumindest zwei Betätigungsabschnitte derart an der Mantelfläche des Drehrads angeordnet sind, dass sie von einem Maschinenbediener mit einer Hand und/oder deren Finger erfassbar sind.

Die unterschiedliche Oberflächenstrukturierung von zumindest zwei funktional unterschiedlichen Betätigungsabschnitten am Drehrad erlaubt dem Maschinenbediener auf einfache Weise eine taktile bzw. haptische Rückmeldung darüber, welchen Betätigungsabschnitt seine Hand bzw. zumindest einer seiner Finger jeweils erfasst. Somit wird ermöglicht, dass ein Maschinenbediener seine Aufmerksamkeit primär auf den Arbeitsbereich der elektrischen Maschine richten kann. Im Grenzfall kann der Maschinenbediener durch die intuitiv gestalteten Oberflächenstrukturierungen des Drehrads völlig sichtabgewandt vom Bedienelement arbeiten. Durch die unterschiedlichen Oberflächenstrukturierungen zumindest zweier Betätigungsabschnitte wird eine versehentliche Betätigung eines falschen Betätigungsabschnittes signifikant reduziert. Dies erhöht die Sicherheit des Maschinenbedieners, sowie der vom Maschinenbediener gesteuerten Maschine. Eine Erhöhung der Prozesssicherheit für die elektrische Maschine, der eingesetzten Werkzeuge und Werkstücke wird hierbei besonders begünstigt. Von Vorteil an der erfindungsgemäßen Ausbildung des Bedienelementes ist außerdem, dass mittels dem Bedienelement eine Vielzahl von verschiedenen Steuerbefehlen durchgeführt werden kann, wobei das Bedienelement dennoch einen relativ einfachen konstruktiven Aufbau aufweist. Weiters kann durch die Oberflächenstrukturierungen der Halt der Hand des Maschinenbedieners auf dem Drehrad signifikant verbessert werden.

Darüber hinaus kann das Drehrad mittels einem einfachen Drehsensor, beispielsweise einem Inkrementalgeber oder einem Absolutwertgeber, am Bedienelementkörper angekoppelt sein. Der Drehsensor am Bedienelementkörper kann mit den zumindest zwei Betätigungsabschnitten bzw. den Sensorelementen der Sensorbereiche des Drehrades funktional gekoppelt sein. Die Auswahl und/oder Eingabe von Parametern in die Steuerung der Maschine erfolgt über das Drehrad, wobei der Drehsensor die Dreh- bzw. Rotationsbewegung des Drehrades erfasst. Je nach Position der Hand bzw. Finger des Maschinenbedieners können die zumindest zwei Betätigungsabschnitte der Drehbewegung des Drehrades von einer mit dem Drehsensor verbundenen Steuerung, insbesondere einer Steuer- und/oder Auswertevorrichtung, eindeutig zugeordnet werden. Somit ist eine sehr einfache, komfortable und rasche Eingabe eines Befehls, insbesondere eines Bewegungssteuerbefehls, in die Steuerung der Maschine möglich. Es ist besonders vorteilhaft wenn das Drehrad keinen mechanischen Endanschlag in Rotationsrichtung aufweist.

Weiters kann es zweckmäßig sein, wenn die zumindest zwei unterschiedliche Oberflächenstrukturierungen aufweisenden Betätigungsabschnitte in Richtung der Rotationsachse voneinander beabstandet angeordnet sind und vollumfänglich in Umfangsrichtung des jeweiligen Sensorbereichs an der Mantelfläche ausgebildet sind. Es ist besonders vorteilhaft wenn die Oberflächenstrukturierung um den gesamten Umfang ausgebildet sind, da sie dadurch unabhängig von einem Verdrehwinkel des Drehrades vom Maschinenbediener wahrgenommen werden können. Von Vorteil ist außerdem, dass ein erster Sensorbereich an einem ersten Betätigungsabschnitt zur Bestätigung von Eingabebefehlen dient, wobei z.B. durch axiales Verschieben der Hand des Maschinenbedieners der Bestätigungsbefehl ausgelöst werden kann. Die axiale Beabstandung bzw. Anordnung der Betätigungsabschnitte in Richtung der Rotationsachse hat den Vorteil, dass mittels Verschieben einer Hand des Maschinenbedieners auch mehrere Betätigungsabschnitte mit einer Hand erreicht werden können. Eine ausreichende Beabstandung kann bereits durch eine Trennung der Betätigungsabschnitte in Umfangsrichtung gegeben sein. Hierbei kann eine Nut oder Kerbe zur Trennung ausreichend sein.

Ferner kann vorgesehen sein, die zumindest zwei Betätigungsabschnitte des Drehrades über eine gemeinsame Drehachse gegenüber dem Bedienelementkörper verdrehbar gelagert sind. Das heißt, dass die Betätigungsabschnitte des Drehrades starr gekoppelt sind und somit in Umfangsrichtung des Drehrades ausschließlich gleichzeitig bewegt werden können. Die Verbindung der zumindest zwei Betätigungsabschnitte zum Bedienelements wird dadurch konstruktiv sehr vereinfacht, da die Anbindungsstelle zwischen Drehrad und Bedienelementkörper in Form eines einfachen Drehsensors ausgebildet sein kann, wodurch das Drehrad eine geringe Fehleranfälligkeit aufweist. Auf einen komplizierten Aufbau mittels z.B. mehrerer Hohlachsen, welche jeweils einem Betätigungsabschnitt zugeordnet sind, kann hierdurch verzichtet werden. Die Eingabe von zumindest einem Befehl in die Steuerung wird durch die Erkennung der Position einer Hand bzw. der Finger des Maschinenbedieners am jeweiligen Betätigungsabschnitt ermöglicht.

Darüber hinaus kann vorgesehen sein, dass das Drehrad in dessen Grundkontur rotationssymmetrisch, insbesondere zylindrisch, ausgebildet ist und der lokale Durchmessermittelwert der Mantelfläche zwischen 20mm und 80mm, insbesondere zwischen 35mm und 60mm, bevorzugt zwischen 40mm und 50mm aufweist. Unter Grundkontur ist hierbei die "Einhüllende" der Mantelfläche des Drehrades entlang seiner Rotationsachse zu verstehen. Die Grundkontur des Drehrades entspricht also der äußeren Gestalt des Drehrades, das der Maschinenbediener ergreift. Durch eine rotationssymmetrische, und hierbei bevorzugt zylinderförmige, Ausbildung des Drehrades kann darüber hinaus erreicht werden, dass die Hand des Maschinenbedieners gut axial entlang dem Drehrad gleiten kann und somit die einzelnen Eingabebefehle gut selektiert und/oder bestätigt werden können. Von Vorteil ist hierbei, dass ein derartig aufgebautes Drehrad vom Maschinenbediener einfach zu ergreifen und zu bedienen ist.

Vorteilhaft ist auch eine Ausprägung, gemäß welcher vorgesehen sein kann, dass zumindest einer der Betätigungsabschnitte entlang der Rotationsachse unterschiedliche, insbesondere kontinuierlich und/oder diskontinuierlich zu- und/oder abnehmende lokale Durchmessermittelwerte der Mantelfläche aufweist. Die Handhabung eines Drehrades kann z.B. durch Absätze und/oder durch gestufte und/oder durch verlaufende Übergänge entscheidend verbessert werden. Das Drehrad kann an jedem Punkt seiner Rotationsachse einen unterschiedlichen lokalen Durchmessermittelwert aufweisen. Hierbei ist von Vorteil, dass die Position der Hand bzw. Finger an der Mantelfläche eines derartig aufgebauten Drehrades vom Maschinenbediener relativ einfach zu erfassen ist. Eine Fehlbedienung und/oder unbeabsichtigte Bestätigung eines Befehls and die Steuerung der Maschine kann weitestgehend vermieden werden. Weiters wird dem Maschinenbediener durch adäquate Formgebung des Drehrades mittels Absätzen, insbesondere jedoch Rundungen, ein besonders ergonomisches und ermüdungsfreies Arbeiten ermöglicht. Dies verbessert die Konzentration des Maschinenbedieners und somit auch die Qualität.

Gemäß einer Weiterbildung ist es möglich, dass die Oberflächenstrukturierung zumindest eines der Betätigungsabschnitte runde und/oder längsgestreckte Erhebungen, wie z.B. Stege, Noppen, Pyramiden, und/oder Vertiefungen, wie z.B. Rillen, Nuten, Dellen, Waben, Dimples, Grübchen, gegenüber dem lokalen Durchmessermittelwert der Mantelfläche aufweist. Die Position der Hand bzw. der Finger an der Mantelfläche, und somit den zumindest zwei Betätigungsabschnitten, kann somit sofort vom Maschinenbediener wahrgenommen werden. Von Vorteil ist hierbei, dass der Maschinenbediener bereits beim Angreifen des Drehrades die Relativposition seiner Hand bzw. Finger am Drehrad "erfühlt". Im Kontext dieser Erfindung umfasst der Begriff Oberflächenstrukturierung die Beschaffenheit der Oberfläche, insbesondere der Mantelfläche, des Drehrades.

Vordergründig ist mit Oberflächenstrukturierung daher gemeint, dass der Fachmann für eine geeignete Gestaltung der Oberfläche der Betätigungsabschnitte Oberflächenmerkmale wie Erhebungen bzw. Vertiefungen vorgeben kann. Es soll hierbei jedoch explizit darauf hingewiesen werden, dass im Kontext der Erfindung auch eine "glatte" Oberfläche eines der Betätigungsabschnitte als Oberflächenstrukturierung verstanden werden kann. Mit "glatt" kann hierbei eine Oberfläche verstanden werden, welche z.B. im Zuge des Herstellungsprozess des Drehrads eine Spritzguß-, Guß-, Walz-, Fräs-, Dreh- oder Profilieroberfläche aufweist. Es ist auch denkbar, dass die Oberfläche im Nachgang einer mechanischen und/oder chemischen Bearbeitung, wie z.B. einem Ätzprozess, unterzogen wird. Die unterschiedlichen Oberflächenrauheiten können bereits als unterschiedliche Oberflächenstrukturierungen von einem Maschinenbediener wahrgenommen werden. Von Vorteil ist es aus fertigungstechnischer Sicht, wenn ein Betätigungsabschnitt daher eine "glatte" Oberfläche aufweist, wie sie aus dem Herstellungsprozess resultiert. Diese "glatte" Oberfläche erfordert im Wesentlichen keinen Zusatzaufwand für die Oberflächenstrukturierung und ist aufgrund der unterschiedlichen Oberflächenstrukturierung der anderen Betätigungsabschnitte dennoch für den Maschinenbediener ausreichend gut taktil und/oder haptisch unterscheidbar. Eine Kombination von verschiedenen Erhebungen und/oder Vertiefungen und/oder Oberflächenrauheiten für die Gestaltung eines Betätigungsabschnittes ist ebenso denkbar.

Ferner kann es zweckmäßig sein, wenn die längsgestreckten Erhebungen und/oder Vertiefungen ein Verhältnis einer größeren Ausdehnung zu einer kürzeren Ausdehnung der Erhebungen, respektive der Vertiefungen, an der Mantelfläche von größer als 1,5, bevorzugt größer 5, aufweisen. Es ist von Vorteil die Oberflächenstrukturierung in ausreichender Größe vorzusehen um eine Unterscheidbarkeit der Erhebungen und/oder Vertiefungen voneinander zu gewährleisten. Dies ist besonders hilfreich, wenn z.B. längsgestreckte Dellen oder Stege als Oberflächenstrukturierung ausgebildet sind. Hierbei sind auch in Umfangsrichtung geschlossene längsgestreckte Erhebungen und/oder Vertiefungen gemeint. Ebenso sind hiermit in Richtung der Rotationsachse, oder in einem Winkel zur Rotationsachse geneigte, Erhebungen und/oder Vertiefungen gemeint.

Darüber hinaus kann vorgesehen sein, dass die Oberflächenstrukturierung zumindest eines der Betätigungsabschnitte gleichmäßig über die Mantelfläche des jeweiligen Betätigungsabschnitts ausgebildet ist. Dies vereinfacht die Zuordnung einer Oberflächenstrukturierung zu einem individuellen Betätigungsfeld.

Weiters kann vorgesehen sein, dass die Oberflächenstrukturierung zumindest eines der Betätigungsabschnitte in zumindest eine Richtung, bevorzugt in Umfangsrichtung, symmetrisch über die Mantelfläche des jeweiligen Betätigungsabschnitts ausgebildet ist. Die symmetrische Gestaltung der Oberflächenstrukturierung bietet fertigungstechnische Vorteile und kann relativ kostengünstig realisiert werden. Weiters ist die Ausgangsstellung des Drehrades beim Ergreifen durch einen Maschinenbediener unerheblich, wenn das Drehrad keinen mechanischen Anschlag aufweist. Es ist darüber hinaus für einen Maschinenbediener kein "Umlernen" von einem Drehrad eines Bedienelements einer Maschine auf ein anderes Drehrad bzw. Bedienelement einer anderen Maschine erforderlich.

Gemäß einer besonderen Ausprägung ist es möglich, dass die Oberflächenstrukturierung zumindest eines der Betätigungsabschnitte unregelmäßig über die Mantelfläche des jeweiligen Betätigungsabschnitts ausgebildet ist. Für gewisse Anwendungen kann es vorteilhaft sein, wenn die Oberflächenstrukturierung unregelmäßig über Abschnitte des Drehrades ausgebildet ist. Dies kann z.B. bei gebürsteten oder kugelgestrahlten Oberflächen der Fall sein. Solche Verfahren bilden oftmals an den Randbereichen keine scharf definierten Grenzflächen aus. Diese Oberflächenstrukturen können jedoch relativ einfach und dadurch kostensparend verwirklicht werden.

Entsprechend einer vorteilhaften Weiterbildung kann vorgesehen sein, dass die Oberflächenstrukturierung zumindest eines der Betätigungsabschnitte ein Verhältnis der Abweichung der größten Erhebung und/oder niedrigsten Vertiefung der Mantelfläche in Normalrichtung zur Rotationsachse zum lokalen Durchmessermittelwert von größer als 0,001, bevorzugt 0,005, besonders bevorzugt größer als 0,01 aufweist. Es hat sich als vorteilhaft erwiesen, dass die Oberflächenstrukturierung, vor allem in Form von Erhebungen und/oder Vertiefungen, mit der Grundkontur bzw. dem lokalen Durchmessermittelwert skalieren. Es hat sich gezeigt, dass eine Mindestabweichung der Erhebung und/oder Vertiefung vom lokalen Durchmessermittelwert für eine ausreichende taktile und/oder haptische Wahrnehmung des Maschinenbedieners besonders günstig ist.

Insbesondere kann es vorteilhaft sein, wenn die Mantelfläche zumindest eines der Betätigungsabschnitte überwiegend aus Metall besteht. Hierdurch wird eine besonders robuste Bauweise des Drehrades begünstigt. Von Vorteil ist hierbei, dass Sensorelemente für eine Leitfähigkeitsmessung in zumindest einem der Betätigungsabschnitte eingesetzt werden können. Eine hohe Empfindlichkeit und somit eine gute Erkennbarkeit der Position der Hand bzw. Finger des Maschinenbedieners wird dadurch erleichtert.

Ferner kann vorgesehen sein, dass die Oberflächenstrukturierung zumindest eines der Betätigungsabschnitte zumindest teilweise ein zweites Material, vorzugsweise Kunststoff, aufweist. Für eine optimierte Unterscheidbarkeit zweier unterschiedlicher Oberflächenstrukturierungen hat sich gezeigt, dass nicht nur geometrische Merkmale, sondern auch das "Angreifgefühl" eine Rolle spielen können. Es kann daher vorteilhaft sein, wenn ein zweites Material, welche z.B. eine höhere, gefühlte Oberflächentemperatur als das erste Material aufweist. Zudem können Oberflächenstrukturierungen aus einem oder mehreren weiteren Materialien relativ einfach aufgebracht werden. Hier sind z.B. Sprüh-, Klebe- oder Belackungsverfahren und dergleichen denkbar. Des Weiteren kann durch die Wahl eines weiteren Materials die Sicherheit gegen Verrutschen der Hand bzw. der Finger des Maschinenbedieners erhöht werden. Dies bietet deutliche sicherheitstechnische Vorteile. Im Falle, dass das Drehrad aus Metall gefertigt ist, bietet ein zweites Material, und hierbei insbesondere ein dielektrisches Material, wie z.B. Kunststoff, den Vorteil, dass ein oder mehrere den Betätigungsabschnitten zugeordnete Sensorelemente als kapazitive Sensoren ausgeführt sein können. Solche kapazitiven Sensoren können z.B. als Näherungssensoren, Wegsensoren, Beschleunigungssensoren oder auch Drucksensoren ausgebildet sein. Die Vielfalt der möglichen Befehle an eine Steuerung der Maschine wird damit deutlich erhöht.

Darüber hinaus ist vorgesehen, dass zumindest ein Betätigungsabschnitt ein drucksensitives Sensorelement aufweist. Die Parameterauswahl, Bestätigung von Befehlen, und dergleichen kann mittels erfindungsgemäßem Bedienelement über die zumindest zwei Betätigungsabschnitte des Drehrades gegenüber der Steuerung der Maschine erfolgen. Es hat sich jedoch als besonders vorteilhaft erwiesen, dass für die Signalisierung eines Ausnahmezustandes, gegenüber der Steuerung der Maschine ein drucksensitives Sensorelement vorgesehen ist. Ein Maschinenbediener kann bei Erkennen einer Gefahrensituation für z.B. das Werkzeug oder das Werkstück durch Ausübung einer Kraft einen "Stop-Befehl" an die Steuerung der Maschine auslösen. Eine versehentliche Betätigung wird durch die "Normalbetriebsweise" über die Drehbewegung des Drehrades und Bestätigung der Befehle mittels Verschiebung der Finger über zumindest ein Betätigungsfeld, effizient vermieden. Der Sensorbereich des drucksensitiven Sensorelements kann dabei an der Mantelfläche in Umfangsrichtung liegen.

Weiter ist das drucksensitive Sensorelement derart angeordnet ist, dass dessen Sensorbereich im Wesentlichen in Richtung der Rotationsachse ausgerichtet ist. Hierbei ist von Vorteil, dass für die "Normalbetriebsweise" des Drehrades im Wesentlichen nur Rotationsbewegungen des Drehrades um seine Rotationsachse, sowie Verschiebungen der Hand bzw. Finger eines Maschinenbedieners an der Mantelfläche des Drehrades erforderlich sind. Eine, mit einer Krafteinwirkung verbundene, Bewegung in Richtung der Rotationsachse auf das drucksensitive Sensorelement stellt einen großen, und somit deutlichen, Unterschied zur "Normalbetriebsweise" dar und kann somit eindeutig vom Maschinenbediener einer Ausnahmesituation zugeordnet werden. Die Krafteinleitung in Richtung der Rotationsachse kann im Grenzfall sogar durch einen Schlag des Maschinenbedieners auf das Drehrad erfolgen. Eine kurze Reaktionszeit des Maschinenbedieners wird dadurch ermöglicht, was eine Erhöhung der Sicherheit im Betrieb mit sich bringt.

Gemäß einer Weiterbildung ist es möglich, dass das Drehrad am Bedienelementkörper in Richtung der Rotationsachse verschiebbar gelagert ist und ein Schalt- oder Sensorelement ausgebildet ist, welches in Abhängigkeit der Verschiebung des Drehrades entlang seiner Rotationsachse zur Signalisierung oder Auslösung eines Schnellstop- oder Notstop-Befehls vorgesehen ist. In dieser Weiterbildung ist es vorteilhaft, dass die Befehlseingabe für eine Ausnahmesituation in die Steuerung der Maschine entkoppelt wird von den zumindest zwei Betätigungsabschnitten an der Mantelfläche. Durch die kompakte Bauweise des Drehrades, welches nur eine gemeinsame Drehachse für die zumindest zwei Betätigungsabschnitte aufweist, ist eine Verschiebung des Drehrades entlang seiner Rotationsachse sehr einfach vom Maschinenbediener durchführbar. Die Position der Krafteinleitung am Drehrad ist daher für die Verschiebung von untergeordneter Rolle. Im Grenzfall kann diese sogar durch einen Schlag des Maschinenbedieners auf das Drehrad erfolgen, damit eine Verschiebung in Richtung der Rotationsachse eingeleitet wird. Es hat sich herausgestellt, dass eine Verschiebung des Drehrades vom Maschinenbediener sehr gut wahrgenommen wird. Das Schalt- oder Sensorelement, welches zur Signalisierung eines "Schnellstop- "oder "Notstop-Befehls" an die Steuerung der Maschine vorgesehen ist, kann im Bedienelement sehr einfach und robust verbaut werden. Dies stellt eine kostengünstige und sehr sichere Bauweise dar. Es kann auch vorgesehen sein, dass das Drehrad nach der Verschiebung entlang der Rotationsachse in seiner Position arretiert wird. Das Lösen des Drehrades kann in diesem Fall erst nach einer Quittierung des Schnellstop- oder Notstopf-Befehls erfolgen.

Darüber hinaus kann vorgesehen sein, dass einem ersten, zweiten und/oder weiteren Betätigungsabschnitt jeweils eine Maschinenfunktion ausgewählt aus der Gruppe Bearbeitungsvorschub, Spindeldrehzahl, Leergang-Vorschub, axiale Zustellung, radiale Zustellung, Werkzeugwechsel zugeordnet sind. Das erfindungsgemäße Bedienelement hat sich besonders vorteilhaft für die Steuerung von Fertigungsanlagen bzw. Werkzeugmaschinen erwiesen. Insbesondere die Bedienung von z.B. CNC-Fräsmaschinen, CNC-Drehmaschinen, aber auch Spritzgussmaschinen kann durch das Bedienelement signifikant erleichtert werden. Im Falle von CNC-Fräsmaschinen können die häufigsten Funktionen bzw. Bewegungsbefehle der Maschine, wie z.B. Bearbeitungsvorschub, Spindeldrehzahl und Verfahrgeschwindigkeit im Leerlauf (Leergang Vorschub), relativ einfach mittels dafür vorgesehener Betätigungsabschnitte am Drehrad bedient werden und in die Steuerung der Maschine eingegeben werden. Auch weitere Funktionen, wie etwa axiale Zustellung, radiale Zustellung oder Werkzeugwechsel können mittels erfindungsgemäßem Bedienelement in die Steuerung der Maschine eingegeben werden.

Sämtliche am Drehrad angeordnete Sensoren können als einzelne Sensorelemente ausgebildet sein, welche dazu vorgesehen sind, um den jeweilig zugehörigen Sensorbereich zu erfassen. Es ist jedoch auch denkbar, dass einem Sensorbereich zwei oder eine Vielzahl von Sensorelementen zugeordnet sind, welche den Sensorbereich erfassen. Das Vorsehen von mehreren Sensorelementen für einen Sensorbereich kann den Vorteil mit sich bringen, dass eine Redundanz ermöglicht wird und daher ein Ausfall eines Sensorelementes kompensiert werden kann. Dies kann insbesondere zur Erhöhung der Maschinensicherheit notwendig sein.

Insbesondere kann vorgesehen sein, dass die Sensorelemente dazu ausgebildet sind, um Berührungen durch den Maschinenbediener in bestimmten Bereichen bzw. Betätigungsabschnitten des Drehrades zu erfassen.

Die Sensorelemente an sich können beispielsweise als resistive Senoren ausgebildet sein.

Eine weitere Möglichkeit ist, dass die Sensorelemente in Form von optischen Sensoren ausgebildet sind.

Generell können die Sensorelemente durch jegliche Sensorelemente realisiert werden, welche dazu geeignet sind eine Berührung des Drehrades durch die Hand bzw. Finger des Maschinenbedieners zu erfassen. Besonders bevorzugt sind die Sensorelemente hierbei als kapazitive Sensoren ausgebildet.

Die Sensorelemente können an der Oberfläche des Drehrades angeordnet sein, oder in das Drehrad eingegossen oder durch sonstige Maßnahmen, wie dem Vorsehen von entsprechenden Aufnahmebereichen integriert sein.

Insbesondere ist eine Kombination von Sensorelementen mit Oberflächenstrukturierungen der Betätigungsabschnitte denkbar.

Zum besseren Verständnis der Erfindung wird diese anhand der nachfolgenden Figuren näher erläutert.

Es zeigen jeweils in stark vereinfachter, schematischer Darstellung:
- Fig. 1: ein Layout einer Fertigungsanlage mit einer Maschine, einer Steuerung und einem Bedienelement;
- Fig. 2: das Bedienelement in einer Vorderansicht;
- Fig. 3: das Bedienelement in einer Seitenansicht;
- Fig. 4: das Bedienelement in einer Seitenansicht mit einer Hand eines Maschinenbedieners im Greifbereich;
- Fig. 5: das Bedienelement in einer Seitenansicht mit der Hand des Maschinenbedieners im ersten Betätigungsabschnitt mit einem ersten Sensorbereich;
- Fig. 6: das Bedienelement in einer Seitenansicht mit der Hand des Maschinenbedieners im ersten und zweiten Betätigungsabschnitt mit einem ersten und zweiten Sensorbereich;
- Fig. 7: das Bedienelement in einer Seitenansicht mit der Hand des Maschinenbedieners am Umfangsabschnitt eines Absatzes;
- Fig. 8: das Bedienelement mit unterschiedlichen Oberflächenstrukturierungen der einzelnen Betätigungsabschnitte in einer Schrägansicht (a); bzw. in einer Schnittansicht in Längsrichtung (b);
- Fig. 9: verschiedene Beispiele (a) - (h) von Grundkonturen eines Drehrades;
- Fig. 10: verschiedene Beispiele (a) - (k) von unterschiedlichen Oberflächenstrukturierungen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

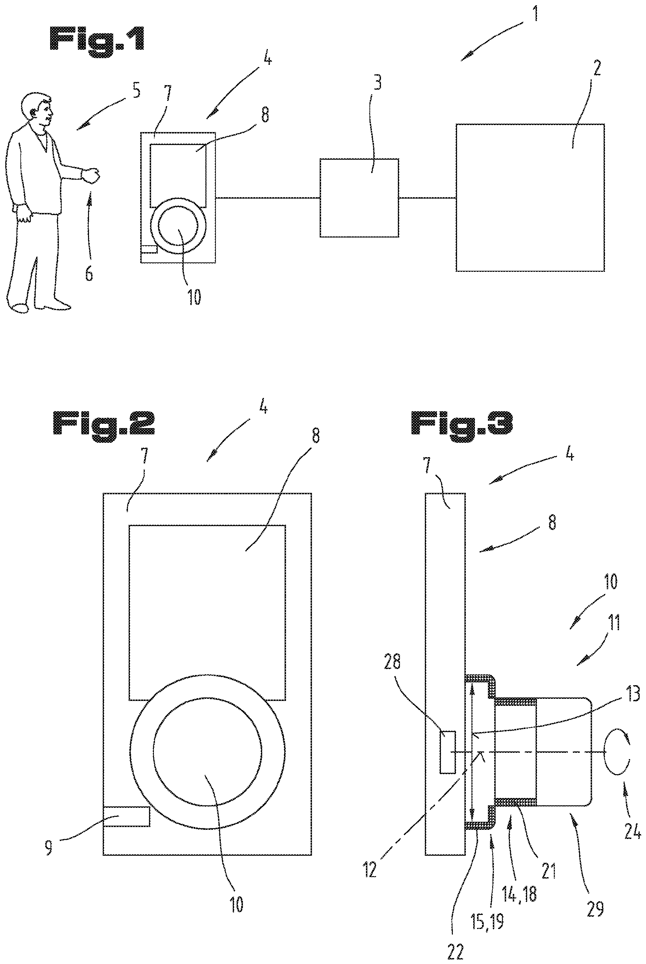

Fig. 1 zeigt eine schematische Darstellung einer Fertigungsanlage 1 mit einer elektrisch gesteuerten Maschine 2, einer Steuerung 3 für die Maschine 2 und einem Bedienelement 4 zur Eingabe von Steuerbefehlen in die Steuerung 3 einen Maschinenbediener 5. Insbesondere ist vorgesehen, dass der Maschinenbediener 5 mit dessen Hand 6 das Bedienelement 4 bedient.

Die Maschine 2 kann beispielsweise eine Fräs-, Dreh- oder Spritzgießmaschine sein. Weiters ist es auch denkbar, dass die Maschine 2 ein Roboter oder eine sonstige Maschine im industriellen Einsatz ist. Insbesondere kann vorgesehen sein, dass die Maschine 2 zum Fertigen von Bauteilen dient.

Die Steuerung 3 kann durch jede mögliche erdenkliche Art von Steuerung gebildet sein. Dies kann beispielsweise ein Industrierechner, eine speicherprogrammierbare Steuerung oder eine sonstige Steuerung sein, welche dazu geeignet ist, die über das Bedienelement 4 eingegebenen Befehle in Bewegungsbefehle für die Maschine 2 umzuwandeln.

In den Fig. 2 und 3 ist das Bedienelement 4 in einer Vorderansicht bzw. in einer Seitenansicht dargestellt.

Wie aus diesen beiden Figuren ersichtlich, kann vorgesehen sein, dass das Bedienelement 4 einen Bedienelementkörper 7 aufweist, welcher den zentralen Bauteil des Bedienelementes 4 bildet und beispielsweise durch ein Gehäuse definiert sein kann. Weiters kann vorgesehen sein, dass im Bedienelementkörper 7 ein Anzeigedisplay 8 aufgenommen ist. Das Anzeigedisplay 8 dient zum Anzeigen von Menüpunkten, Geschwindigkeitsstellungen und sonstigen Parametern oder Optionen, welche für die Steuerung der Maschine 2 notwendig sind. In einer weiteren Ausführungsvariante kann auch vorgesehen sein, dass das Anzeigedisplay 8 nicht im Bedienelement 4 integriert ist, sondern dass das Anzeigedisplay 8 an anderer Stelle in der Fertigungsanlage 1 angeordnet ist.

Darüber hinaus kann vorgesehen sein, dass das Bedienelement 4 ortsfest an der Fertigungsanlage 1 angeordnet ist und mittels einer kabelgebundenen Verbindung mit der Fertigungsanlage 1 gekoppelt ist.

In einer alternativen Ausführungsvariante kann auch vorgesehen sein, dass das Bedienelement 4 in Form einer Fernbedienung ausgebildet ist und über eine drahtlose Verbindung mit der Steuerung 3 kommuniziert.

Weiters kann vorgesehen sein, dass die Steuerung 3 im Bedienelement 4 integriert ist und die Steuerbefehle direkt vom Bedienelement 4 an die Maschine 2 gegeben werden.

Wie aus Fig. 2 weiters ersichtlich, kann vorgesehen sein, dass am Bedienelement 4 eine oder mehrere Drucktasten 9 angeordnet sind. Die Drucktasten 9 können dazu dienen, um diverse Befehle durch den Maschinenbediener 5 in das Bedienelement 4 einzugeben.

Erfindungsgemäß ist am Bedienelementkörper 7 ein Drehrad 10 angeordnet, welches bezüglich einer Rotationsachse 12 relativ zum Bedienelementkörper 7 verdrehbar ist. Das Drehrad 10 bildet einen zentralen Bestandteil des Bedienelementes 4. Die Drucktaste 9 kann optional vom Bedienelementkörper 7 weggelassen werden und deren Funktion ebenfalls im Drehrad 10 realisiert werden.

Entgegen der aus dem Stand der Technik bekannten Ausführungen ist vorgesehen, dass das Drehrad 10 nur um die Rotationsachse 12 drehbar am Bedienelementkörper 7 gelagert sein kann. Das Drehrad 10 ist gegenüber dem Bedienelement 7 mittels einer Drehachse 25 mechanisch verbunden und verdrehbar gelagert. Durch die in weiterer Folge noch näher beschriebene Ausführung des Drehrades 10 ist es nicht zwingend erforderlich, dass dieses relativ zum Bedienelementkörper 7 axial verschiebbar bzw. verschwenkbar ist.

Dadurch dass das Drehrad 10 nur drehbar am Bedienelementkörper 7 aufgenommen ist, kann die Anbindungsstelle zwischen Drehrad 10 und Bedienelementkörper 7 in Form eines einfachen Drehsensors ausgebildet sein, wodurch das Drehrad 10 eine geringe Fehleranfälligkeit aufweist. Die Anbindungsstelle des Drehrads 10 kann als "Endlosanschlag" ausgeführt sein. In diesem Fall ist kein mechanischer Endanschlag des Drehrads 10 in Rotationsrichtung vorgesehen.

Insbesondere kann vorgesehen sein, dass das Drehrad 10 eine Mantelfläche 11 aufweist, welches die Rotationsachse 12 umgibt und dazu dient, dass der Maschinenbediener 5 das Drehrad 10 greifen kann und bezüglich seiner Rotationsachse 12 verdrehen kann. Insbesondere kann vorgesehen sein, dass die Mantelfläche 11 des Drehrades 10 im Wesentlichen rotationssymmetrisch bezüglich der Rotationsachse 12 ausgebildet ist und einen lokalen Durchmessermittelwert 13 aufweist.

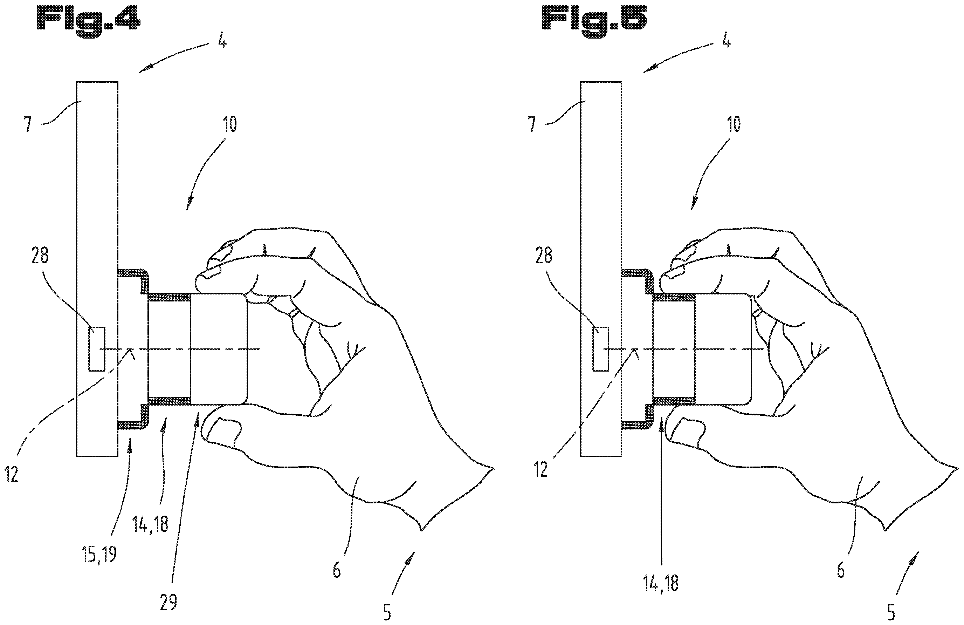

Die Mantelfläche 11 des Drehrads 10 kann zumindest zwei Betätigungsabschnitte 14, 15 mit unterschiedlichen Oberflächenstrukturierungen 17 aufweisen. Zumindest einem der Betätigungsabschnitte 14, 15 ist ein Sensorbereich 18, 19 eines Sensorelements 21, 22 zugeordnet. Jedem der Betätigungsabschnitte 14, 15 des Drehrads 10 können unterschiedliche Maschinenfunktionen zur Eingabe von zumindest einem Befehl in die Steuerung 3 zugeordnet sein. Die Betätigungsabschnitte 14, 15 sind an der Mantelfläche 11 des Drehrads 10 derart angeordnet, dass sie vom Maschinenbediener 5 mit einer Hand 6 bzw. einem oder mehreren Fingern der Hand 6 erfassbar sind, wie in den Fig. 4 bis 7 dargestellt.

Weiters kann vorgesehen sein, dass am Drehrad 10 ein erster Betätigungsabschnitt 14 ausgebildet ist, dessen Sensorbereich 18 den Abschnitt der Mantelfläche 11 des Drehrads 10 umfasst der von einem ersten Sensorelement 21 erfasst ist. Weiters kann vorgesehen sein, dass an der Mantelfläche 11 des Drehrades 10 ein Greifbereich 29 ausgebildet ist, welcher axial zum Betätigungsabschnitt 14, bzw. dem ersten Sensorbereich 18 beabstandet ist. Insbesondere kann vorgesehen sein, dass im Greifbereich 29 kein Sensorelement angeordnet ist.

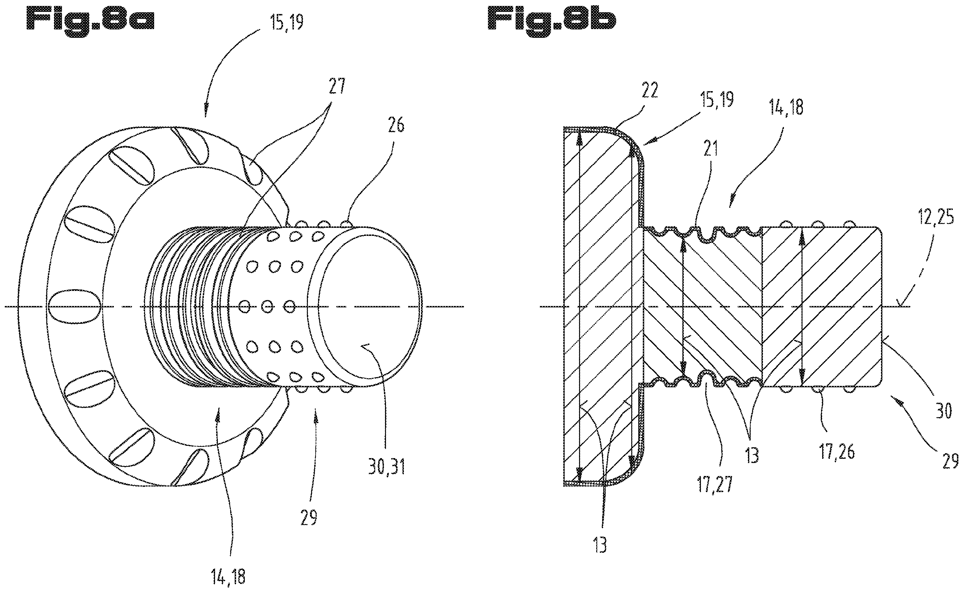

Wie aus Fig. 3 weiters ersichtlich, kann vorgesehen sein, dass der erste Betätigungsabschnitt 14 näher am Bedienelementkörper 7 angeordnet ist als der Greifbereich 29. In den exemplarischen Darstellungen Fig. 3 bis 7 ist jeweils ein Drehrad 10 gezeigt, das einen Absatz aufweist. Weitere Ausführungsformen von Geometrien für ein Drehrad 10 in Fig.8 gelten einander ergänzend mit Fig. 3 bis 7 und 9 in gleicher Weise für die gegenständliche Erfindung.

Der erste Betätigungsabschnitt 14, sowie ein korrespondierender Sensorbereich 18, kann am Drehrad 10 vollumfänglich ausgebildet sein und eine ausreichend große Axialerstreckung aufweisen, um die Hand 6 des Maschinenbedieners 5 erfassen zu können.

Weiters kann vorgesehen sein, dass am Drehrad 10 zumindest ein zweiter Betätigungsabschnitt 15 mit einem korrespondierenden zweiten Sensorbereich 19 und diesen Sensorbereich 19 erfassenden Sensorelement 22 angeordnet ist. Insbesondere kann vorgesehen sein, dass der zweite Sensorbereich 19 vollumfänglich den Abschnitt der Mantelfläche 11 des Drehrads 10 der von dem zweiten Betätigungsabschnitt 15 eingenommen wird.

Es ist besonders vorteilhaft, wenn die zumindest zwei unterschiedliche Oberflächenstrukturierungen 17 aufweisenden Betätigungsabschnitte 14, 15 in Richtung der Rotationsachse 12 voneinander beabstandet angeordnet sind. Eine ausreichende Beabstandung kann bereits durch eine Trennung der Betätigungsabschnitte an der Mantelfläche 11 in Umfangsrichtung 24 gegeben sein. Hierbei kann eine Nut oder Kerbe zur Trennung ausreichend sein. Die Oberflächenstrukturierung 17 kann um den gesamten Umfang eines Betätigungsabschnittes 14, 15 ausgebildet sein, wodurch sie unabhängig von einem Verdrehwinkel des Drehrads 10 vom Maschinenbediener 5 wahrgenommen werden können.

In den Fig. 4 bis 7 sind verschiedene mögliche Stellungen der Hand 6 des Maschinenbedieners 5 dargestellt.

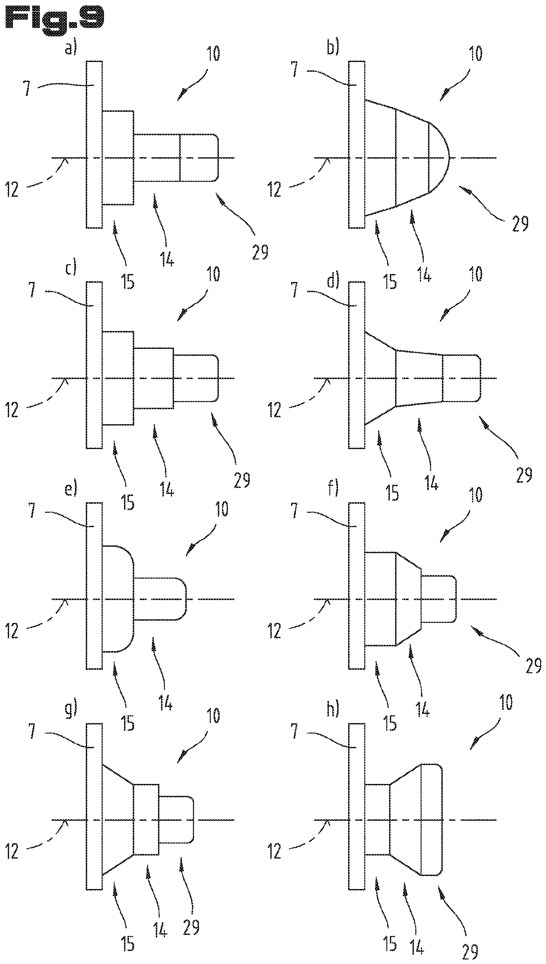

In den Fig. 4 bis 7 ist dabei das Bedienelement 4, wie es in Fig. 3 dargestellt wurde, verwendet. In den Fig. 8 und 9 ist das Bedienelement 4 nicht dargestellt um einen größeren Fokus auf die Ausführungsformen des Drehrads 10 zu legen.

In Fig. 4 ist eine erste Möglichkeit dargestellt, wie das Drehrad 10 des Bedienelementes 4 gegriffen werden kann. Entsprechend der Darstellung in Fig. 4 kann das Drehrad 10 im Greifbereich 29 gegriffen werden, wobei vorgesehen sein kann, dass im Greifbereich 29 kein Sensorelement ausgebildet ist. Dadurch dass vorgesehen sein kann, dass sämtliche andere Bereiche des Drehrades 10 mit Betätigungsabschnitten 14, 15 ausgestattet sein können, kann bei einer Drehbewegung am Drehrad 10 die Hand 6 bzw. Finger des Maschinenbedieners 5 auch dem Greifbereich 29 eindeutig zugeordnet werden.

Im Falle das der Greifbereich 29 keinen korrespondierenden Sensorbereich aufweist, kann dennoch der Greifbereich 29 als eigenständiger Betätigungsabschnitt 14, 15 dienen. Eine Drehbewegung des Drehrads 10 durch Angreifen des Maschinenbedieners 5 am Greifbereich 29 kann demnach einem oder mehreren Befehlen für die Steuerung 3 der Maschine 2 zugeordnet sein.

Wie aus Fig. 5 ersichtlich, kann auch vorgesehen sein, dass die Hand 6 des Maschinenbedieners 5 das Drehrad 10 im ersten Betätigungsabschnitt 14 bzw. ersten Sensorbereich 18 greift. Dies kann ebenfalls einen eigenen Befehl in der Steuerung 3 der Maschine 2 auslösen.

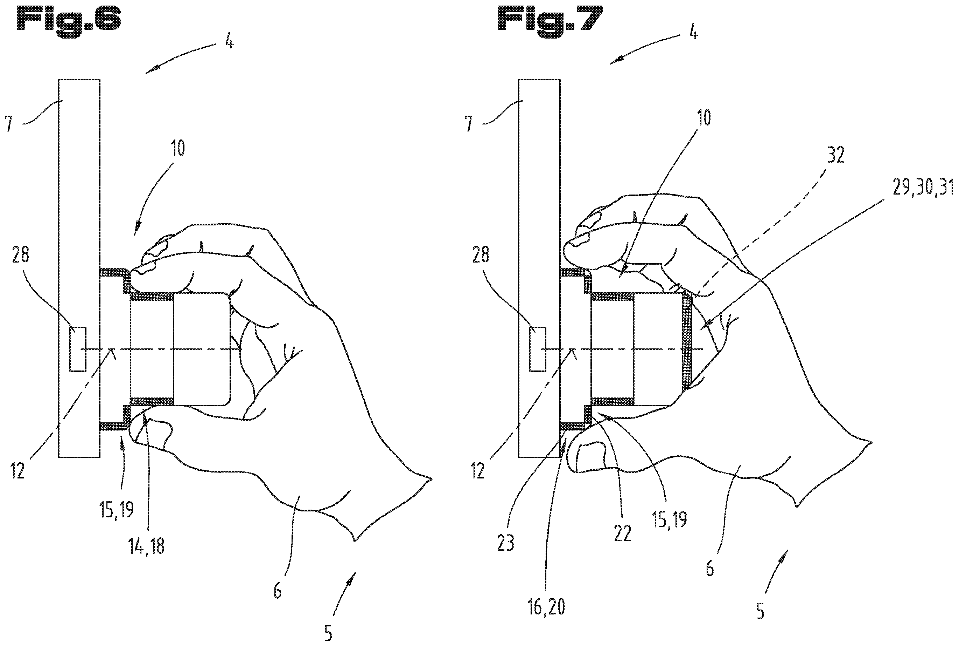

Weiters kann vorgesehen sein, dass, wie in Fig. 6 dargestellt, die Hand 6 bzw. Finger des Maschinenbedieners 5 das Drehrad 10 derart greift, dass sowohl der erste Betätigungsabschnitt 14 bzw. der erste Sensorbereich 18 als auch der zweite Betätigungsabschnitt 15 bzw. der zweite Sensorbereich 19 berührt werden. Dies kann ebenfalls einen eigenen Befehl auslösen. Der Kürze halber wird dabei von einem Greifen des Drehrades 10 im zweiten Sensorbereich 19 gesprochen.

Beispielsweise ist es möglich, dass die Hand 6 bzw. Finger des Maschinenbedieners 5 von einer Stellung wie sie in Fig. 5 dargestellt ist, in eine Stellung wie sie in Fig. 6 dargestellt ist, nach vorne gleitet. Diese Bewegung wird vorzugsweise als Bestätigungsbefehl verwendet.

Das erfindungsgemäße Bedienelement 4 hat sich besonders vorteilhaft für die Steuerung von Fertigungsanlagen 1 erwiesen. Insbesondere die Bedienung von z.B. CNC-Fräsmaschinen, CNC-Drehmaschinen, aber auch Spritzgussmaschinen wird durch das Bedienelement 4 signifikant erleichtert. Im Falle von CNC-Fräsmaschinen können die häufigsten Funktionen bzw. Bewegungsbefehle der Maschine 2, wie z.B. Bearbeitungsvorschub, Spindeldrehzahl und Verfahrgeschwindigkeiten zwischen den Bearbeitungsschritten, relativ einfach mittels dafür vorgesehener Betätigungsabschnitte 14, 15 am Drehrad 10 bedient werden und in die Steuerung 3 der Maschine 2 eingegeben werden. Weitere häufig verwendete Funktionen der Maschine 2, wie etwa axiale Zustellung, radiale Zustellung oder Werkzeugwechsel, können in gleicher Weise mittels Drehrad 10 ausgewählt und bestätigt oder auch optional über eine oder mehrere Drucktasten 9 dem Maschinenbediener 5 zugänglich gemacht werden.

Wie aus Fig. 4 bis 6 ersichtlich und für die jeweiligen Figuren erklärt, kann vorgesehen sein, dass durch die jeweilige Haltung der Hand 6 bzw. der Finger des Maschinenbedieners 5 unterschiedliche Befehle an die Steuerung 3 der Maschine 2 gegeben werden können. Insbesondere können Bewegungen der Maschine 2 oder eines Werkzeugs der Maschine 2 in eine Richtung ausgewählt und deren Verfahr-/Bewegungsgeschwindigkeiten vom Maschinenbediener 5 per Drehrad 10 eingestellt werden. Beispielsweise kann eine Vorwärtsbewegung der Maschine 2 oder eines Werkzeugs der Maschine 2 in zwei verschiedenen vorgegebenen Verfahrgeschwindigkeiten bzw. eine Rückwärtsbewegung in zwei verschiedenen vorgegebenen Verfahrgeschwindigkeiten und auch ein Verfahrstopp im Anzeigedisplay 8 selektierbar sein. In einem ersten Modus kann vorgesehen sein, dass das Drehrad 10 im ersten Betätigungsabschnitt 14 bzw. Sensorbereich 18 gemäß der Darstellung in Fig. 5 gegriffen wird, wobei ein Selektionsfeld über ein Feld im Anzeigedisplay 8 für einen Verfahrstop gezogen wird. Anschließend kann durch Drehung des Drehrades 10 die gewünschte Verfahroption ausgewählt werden und wieder durch Nachvorschieben der Hand 6 der Bestätigungsbefehl gegeben werden. Dadurch kann die gewünschte und vorausgewählte Verfahrbewegung eingeleitet werden.

Während dem Ausführen der Verfahrbewegung ist es denkbar, dass eine weitere gewünschte Verfahrbewegung im Anzeigedisplay 8 selektiert wird und wieder durch Bestätigung durch Vorschieben der Hand 6 ausgewählt wird.

Insbesondere kann vorgesehen sein, dass die Verfahrbewegung nur solange durchgeführt wird, solange sich die Hand 6 in einem der Sensorbereiche 18, 19 befindet und dass bei Loslassen des Drehrades 10 die Verfahrbewegung gestoppt wird.

Im Kontext der gegenständlichen Erfindung ist zur Auswertung der jeweiligen Sensorsignale eines Sensorelementes dieses mit der Steuerung 3 der elektrischen Maschine verbunden. Die Steuerung 3 setzt die ausgewählten Parameter, Optionen, Steuerbefehle durch Aktivierung der jeweiligen Aktoren der Maschine 2 um.

In der Fig. 7 ist eine weitere und gegebenenfalls für sich eigenständige Ausführungsform des Drehrades 10 gezeigt, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Weiters kann wie in Fig. 7 dargestellt, auch vorgesehen sein, dass an einer Stirnseite 30 des Drehrades 10 ein zusätzlicher Sensorbereich 31 mit einem korrespondierenden Sensorelement 32 ausgebildet ist. Ein derartiger zusätzlicher Sensorbereich 31 kann ebenfalls zum Eingeben von Steuerbefehlen, insbesondere eines Stop-Befehls, dienen. Das zusätzliche Sensorelement 32 kann hierbei insbesondere ein drucksensitives Sensorelement sein.

Darüber hinaus kann vorgesehen sein, dass am Drehrad 10 weitere Betätigungsabschnitte bzw. korrespondierende Sensorbereiche ausgebildet sind.

Wie in Fig. 8 ersichtlich kann die Mantelfläche 11 des Drehrades 10 in zumindest zwei Betätigungsabschnitte 14, 15 mit unterschiedlichen Oberflächenstrukturierung 17 unterteilt sein. In Fig. 8a ist eine Schrägansicht eines Drehrads 10 dargestellt, welche im Greifbereich 29 Erhebungen 26 in Form von regelmäßig in Umfangsrichtung verteilten Noppen aufweist. Der Greifbereich 29 kann hierbei als eigener, zusätzlicher Betätigungsabschnitt und/oder Sensorbereich ausgeführt sein. Weiters ist in Fig. 8a ein erster Betätigungsabschnitt 14 ersichtlich, welcher als Oberflächenstrukturierung 17 Vertiefungen 27 in Form von in Umfangsrichtung verlaufenden Nuten aufweist. Die Nuten weisen in Richtung der Rotationsachse unterschiedliche Tiefen auf. Der zweite Betätigungsabschnitt 15 des Drehrads 10 ist in Richtung der Rotationsachse 12 dem Bedienelementkörper 7 am nächsten angeordnet und in Form einer Scheibe mit verrundetem Absatz ausgebildet. Die Oberflächenstrukturierungen 17 des zweiten Betätigungsabschnittes 15 sind als ovale bzw. augenförmige Vertiefungen 27 an der Verrundung des Absatzes, sowie einer glatten Oberfläche der parallel zu Rotationsachse 12 verlaufenden Mantelfläche 11 dieses Betätigungsabschnittes 15, ausgebildet.

Anhand des Beispiels in Fig. 8 soll die Vielzahl an Gestaltungsmöglichkeiten verdeutlicht werden. Weiters ist in Fig. 8b deutlich ersichtlich, dass der lokale Durchmessermittelwert 13 von der Grundkontur des Drehrades, bzw. einzelner Betätigungsabschnitte, abhängt.

Fig. 9 stellt einige Beispiele unterschiedlicher Grundkonturen des Drehrads 10 dar. Die Grundkontur entspricht hierbei im Wesentlichen der "Einhüllenden" der Mantelfläche 11 entlang seiner Rotationsachse 12. Die Grundkontur des Drehrades 10 ist bevorzugt rotationssymmetrisch um die Rotationsachse 12 ausgebildet.

Es ist aus Fig. 8 und 9 besonders gut ersichtlich, dass zumindest einer der Betätigungsabschnitte 14, 15 entlang der Rotationsachse 12 unterschiedliche lokale Durchmessermittelwerte 13 aufweisen kann. Die Betätigungsabschnitte 14, 15 können insbesondere kontinuierliche und/oder diskontinuierlich zu- und/oder abnehmende lokale Durchmessermittelwerte 13 aufweisen. Das Drehrad 10 kann somit einen oder mehrere Absätze und/oder Stufen und/oder verlaufende Übergänge aufweisen (vergleiche Fig. 9 a-h). Dies erhöht die Handhabbarkeit des Drehrads 10 durch den Maschinenbediener 5. Es kann vorteilhaft sein, wenn etwaige Absätze und/oder Stufen und/oder die Enden eines Verlaufs die jeweiligen Betätigungsabschnitte 14, 15 in Richtung der Rotationsachse 12 begrenzen. Wie in Fig. 8 und 9 schematisch abgebildet, kann eine Grundkontur aus mehreren geometrisch einfachen Körpern, wie etwa Scheiben, Konen, oder Kugelsegmenten, zusammengesetzt sein und die äußere Form des Drehrads 10 vorgeben.

Das Drehrad 10 muss daher nicht zwingend als "einteilig" verstanden werden, sondern kann auch aus mehreren Teilabschnitten zusammengesetzt werden. Dies kann fertigungstechnische Vorteile bieten. In solch einem Fall sollen jedoch die Teilabschnitte über eine gemeinsame Drehachse 25 zu einem Drehrad 10, sowie mit dem Bedienelement 7, verbunden sein.

Es haben sich lokale Durchmessermittelwerte 13 der Mantelfläche 11 zwischen 20mm und 80mm, insbesondere zwischen 35mm und 60mm, bevorzugt zwischen 40mm und 50mm, als besonders gut vom Maschinenbediener 5 greifbar erwiesen.

Weiters kann, wie in Fig. 7 dargestellt, die Hand 6 des Maschinenbedieners 5 das Drehrad 10 ebenfalls am Umfangsbereich eines Absatzes greifen. Wenn der zweite Sensorbereich 19 sich über die Stirnseite und den Umfangsbereich eines Absatzes erstreckt, führt dies dazu, dass der zweite Sensorbereich 19 aktiviert wird.

Gemäß dem Ausführungsbeispiel in Fig. 7 ist es auch denkbar, dass im Umfangsbereich eines Absatzes ein dritter Betätigungsabschnitt 16 bzw. dritter Sensorbereich 20 ausgebildet ist, welcher von einem dritten Sensorelement 23 erfasst wird. Bei einer derartigen Ausführung kann das Berühren der Stirnseite eines Absatzes und das Berühren des Umfangsbereiches dieses Absatzes jeweils einen unterschiedlichen Befehl auslösen. Beispielsweise ist es auch denkbar, dass bei Verwendung eines dritten Sensorbereiches 20 die Hand 6 des Maschinenbedieners 5 entsprechend den Darstellungen in Fig. 5 oder 6 positioniert ist und nur ein oder mehrere Finger auf den dritten Betätigungsabschnitt 16 bzw. dritten Sensorbereich 20 gelegt werden, um einen bestimmten Befehl auszulösen.

Die genannten Ausführungsbeispiele der Figurenbeschreibungen 1 bis 7 sind analog auf die Ausführungsbeispiele unterschiedlicher Geometrien des Drehrades 10, wie in Fig. 8 und 9 dargestellt, anzuwenden.

Gemäß einer Weiterbildung ist es möglich, dass die Oberflächenstrukturierung 17 zumindest eines der Betätigungsabschnitte 14, 15, 16 runde und/oder längsgestreckte Erhebungen 26, wie z.B. Stege, Noppen, Pyramiden, Schuppen und/oder Vertiefungen 27, wie z.B. Rillen, Nuten, Dellen, Waben, Dimples, Grübchen gegenüber dem lokalen Durchmessermittelwert 13 der Mantelfläche 11 aufweist. Die Position der Hand 6 bzw. der Finger an der Mantelfläche 11, und somit den zumindest zwei Betätigungsabschnitten 14, 15, 16, kann somit sofort vom Maschinenbediener 5 wahrgenommen werden. Von Vorteil ist hierbei, dass der Maschinenbediener 5 bereits beim Angreifen des Drehrades 10 die Position seiner Hand 6 bzw. Finger "erfühlt". Dadurch wird eine eindeutige Zuordnung der Oberflächenstrukturierungen 17 zu Befehlen an die Steuerung 3 der Maschine 2 ermöglicht.

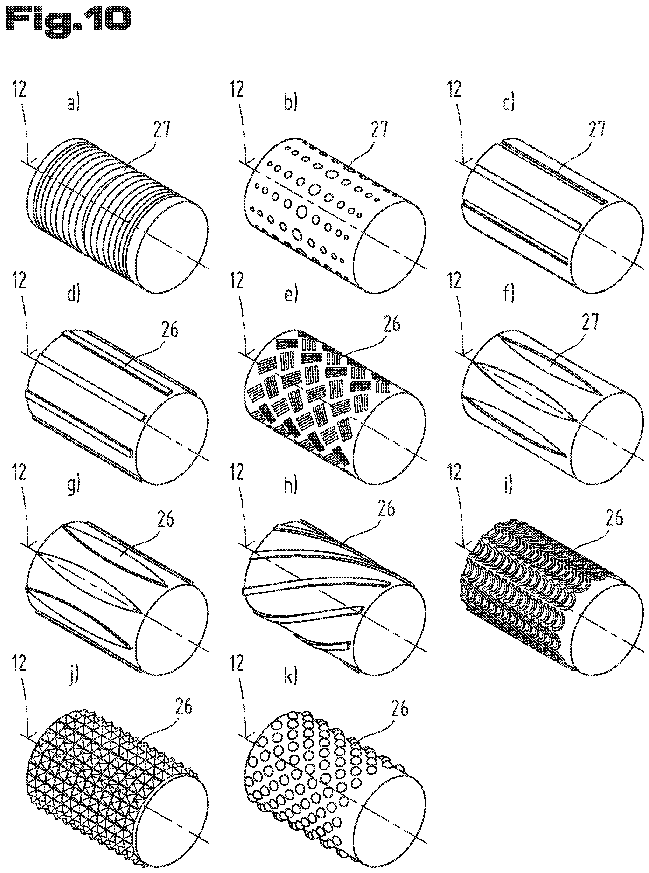

Einige Beispiele möglicher Oberflächenstrukturierungen 17 sind in Fig. 10a-k dargestellt.

Im Kontext dieser Erfindung umfasst der Begriff Oberflächenstrukturierung 17 die Beschaffenheit der Oberfläche, insbesondere Mantelfläche 11, des Drehrades 10. Auch eine "glatte" Oberfläche eines der Betätigungsabschnitte 14, 15, 16 kann als Oberflächenstrukturierung verstanden werden. Unterschiedliche Oberflächenrauheiten können bereits als unterschiedliche Oberflächenstrukturierungen 17 von einem Maschinenbediener 5 wahrgenommen werden. Es ist jedoch besonders bevorzugt wenn die Oberflächenstrukturierungen 17 der zumindest zwei Betätigungsabschnitte 14, 15, 16 deutlich voneinander unterscheidbar sind.

Eine Kombination von verschiedenen Erhebungen 26 und/oder Vertiefungen 27 und/oder Oberflächenrauheiten sind für die Gestaltung der Oberflächenstrukturierungen 17 von zumindest zwei Betätigungsabschnitten 14, 15, 16 ebenso denkbar.

Insbesondere kann vorgesehen sein, wenn längsgestreckte Erhebungen 26 und/oder Vertiefungen 27 ein Verhältnis einer größeren Ausdehnung zu einer kürzeren Ausdehnung der Erhebungen 26, respektive der Vertiefungen 27, an der Mantelfläche 11 von größer als 1,5, bevorzugt größer 5, aufweisen. Dies ist besonders gut aus den Beispielen in Fig. 10a und 10c-i ersichtlich. Ebenso kann vorgesehen sein, dass die Oberflächenstrukturierung 17 zumindest eines der Betätigungsabschnitte 14, 15 in zumindest eine Richtung, bevorzugt in Umfangsrichtung, symmetrisch über die Mantelfläche des jeweiligen Betätigungsabschnitts ausgebildet ist.

Insbesondere können Oberflächenstrukturierungen 17 durchgehend in Umfangsrichtung 24 verlaufend ausgebildet sein (vergleiche Fig.10a und h). Ebenso können die Oberflächenstrukturierungen 17 in Richtung der Rotationsachse 12 oder in einem Winkel zur Rotationsachse 12 geneigt ausgebildet sein (siehe insbesondere Fig.10h). Des Weiteren können die Oberflächenstrukturierungen 17, insbesondere Erhebungen 26 und/oder Vertiefungen 27 versetzt zueinander in zumindest eine Richtung ausgebildet sein (siehe bspw. Fig. 10e,k). Eine solche Oberflächenstrukturierung 17 kann z.B. eine geriffelte oder genoppte Oberfläche darstellen.

Es ist aus Fig. 8 und 10 darüber hinaus ersichtlich, dass die die Oberflächenstrukturierung 17 zumindest eines der Betätigungsabschnitte 14, 15 gleichmäßig über die Mantelfläche 11 des jeweiligen Betätigungsabschnitts 14, 15 ausgebildet sein kann. Die gleichmäßige und/oder symmetrische Gestaltung der Oberflächenstrukturierung 17 kann fertigungstechnisch Vorteile bieten und kostengünstig realisiert werden.

Entsprechend einer Weiterbildung kann es vorgesehen sein, die Oberflächenstrukturierung 17 zumindest eines der Betätigungsabschnitte 14, 15 unregelmäßig über die Mantelfläche 11 des jeweiligen Betätigungsabschnitts 14, 15 ausgebildet ist. Insbesondere bei stochastischen Bearbeitungsverfahren wie z.B. Sandstrahlen oder Kugelstrahlen, oder auch Bearbeitungsverfahren mit unbestimmter Schneide wie z.B. Schleifen oder Bürsten können unregelmäßige Oberflächenstrukturierungen 17 relativ einfach und dadurch kostensparend verwirklicht werden. Solche Verfahren bilden oftmals an den Randbereichen keine scharf definierten Grenzflächen aus.

Entsprechend einer vorteilhaften Weiterbildung kann vorgesehen sein, dass die Oberflächenstrukturierung 17 zumindest eines der Betätigungsabschnitte 14, 15 ein Verhältnis der Abweichung der größten Erhebung 26 und/oder niedrigsten Vertiefung 27 der Mantelfläche 11 in Normalrichtung zur Rotationsachse 12 zum lokalen Durchmessermittelwert 13 von größer als 0,001, bevorzugt 0,005, besonders bevorzugt größer als 0,01 aufweist. Wie in Fig. 8, 9 und 10 dargestellt können die lokalen Durchmessermittelwerte 13 entsprechend der Position entlang der Rotationsachse 12 einfach ermittelt werden. Für eine ausreichend gute Wahrnehmbarkeit des Maschinenbedieners 5 sind solche Mindestabweichungen der Erhebungen 26 und/oder Vertiefungen 27 besonders vorteilhaft. Es kann auch die Höhe der Erhebungen 26 bzw. die Tiefe der Vertiefungen 27 so ausgebildet sein, dass sie eine geeignete Aufnahme für die Finger des Maschinenbedieners 5 zwischen den Erhebungen 26 bzw. in den Vertiefungen 27 darstellen (vergleiche bspw. Fig.8a).

Insbesondere kann es vorteilhaft sein, wenn die Mantelfläche 11 zumindest eines der Betätigungsabschnitte 14, 15 überwiegend aus Metall besteht. Die hohe mechanische Beständigkeit, sowie gute Bearbeitbarkeit von Metallen sind hier für eine robuste Ausführung des Drehrads 10 besonders vorteilhaft. Des Weiteren können die den Sensorbereichen 18, 19 zugeordneten Sensorelemente 21, 22 beispielsweise als Sensorelemente für elektrische Leitfähigkeitsmessung ausgebildet sein.

In einer vorteilhaften Weiterbildung kann vorgesehen sein, dass Oberflächenstrukturierung 17 zumindest eines der Betätigungsabschnitte 14, 15 zumindest teilweise ein zweites Material, vorzugsweise Kunststoff, aufweist. Das Auf- oder Einbringen eines zweiten Materials als Oberflächenstrukturierungen 17 kann die Sicherheit gegen Verrutschen der Hand 6 bzw. der Finger des Maschinenbedieners 5 erhöhen. Im Falle, dass das Drehrad 10 überwiegend aus Metall gefertigt ist, bietet ein zweites Material, und hierbei insbesondere ein dielektrisches Material wie z.B. Kunststoff, den Vorteil, dass ein oder mehrere den Betätigungsabschnitten 14, 15 bzw. Sensorbereichen 18, 19 zugeordnete Sensorelemente 21, 22 als kapazitive Sensoren ausgeführt sein können. Solche kapazitiven Sensoren können z.B. als Näherungssensoren, Wegsensoren, Beschleunigungssensoren oder auch Drucksensoren ausgebildet sein. Die Vielfalt der möglichen Befehle an eine Steuerung 3 der Maschine 2 wird damit deutlich erhöht.

Es ferner kann vorgesehen sein, dass zumindest ein Betätigungsabschnitt 14, 15 ein drucksensitives Sensorelement aufweist. Wie aus der vorangegangen Beschreibung hervorgehend kann der Großteil der Parameterauswahl und Maschinenbefehle mittels Drehrad 10 vorgenommen werden. Es hat sich jedoch als besonders vorteilhaft erwiesen, dass für die Signalisierung eines Ausnahmezustandes, gegenüber der Steuerung 3 der Maschine ein drucksensitives Sensorelement vorgesehen ist. Im Falle einer Gefahren- oder Ausnahmesituation kann der Maschinenbediener 5 durch Ausübung einer Kraft einen "Stop-Befehl" an die Steuerung 3 der Maschine 2 auslösen. Eine versehentliche Auslösung oder Betätigung dieses "Stop-Befehls" wird durch die oben genannte "Normalbetriebsweise", via z.B. Drehbewegung des Drehrads 10 und/oder Verschiebung der Finger des Maschinenbedieners 5 effizient vermieden. Der Sensorbereich 18, 19 eines drucksensitiven Sensorelements kann dabei bevorzugt an der Mantelfläche 11 in Umfangsrichtung 24 liegen.

Es ist jedoch auch eine Ausprägung denkbar, gemäß welcher vorgesehen sein kann, dass ein drucksensitives Sensorelement 23, 32 derart angeordnet ist, dass dessen Sensorbereich 20, 31 im Wesentlichen in Richtung der Rotationsachse 12 ausgerichtet ist. In Ergänzung zur obig genannten Ausführungsform stellt hierbei eine, mit einer Krafteinwirkung verbundene, Bewegung in Richtung der Rotationsachse 12 auf das drucksensitive Sensorelement 23, 32 einen großen, und somit deutlichen, Unterschied zur "Normalbetriebsweise" dar. Der Maschinenbediener 5 kann somit eindeutig eine Ausnahmesituation von der "Normalbetriebsweise" unterschieiden. Die Krafteinleitung in Richtung der Rotationsachse 12 kann im Grenzfall sogar durch einen Schlag des Maschinenbedieners 5 auf das Drehrad 10 erfolgen. Eine kurze Reaktionszeit des Maschinenbedieners 5 wird dadurch ermöglicht, was eine Erhöhung der Sicherheit im Betrieb mit sich bringt. Bevorzugt ist ein drucksensitives Sensorelement als z.B. zusätzliches, viertes Sensorelement 32 an der Stirnseite des Greifbereichs 29 angeordnet.

In einer alternativen Ausführungsform kann das Drehrad 10 am Bedienelementkörper 7 in Richtung der Rotationsachse 12 verschiebbar gelagert sein und ein Schalt- oder Sensorelement 28 ausgebildet sein, welches in Abhängigkeit der Verschiebung des Drehrades 10 entlang seiner Rotationsachse 12 zur Signalisierung oder Auslösung eines Schnellstop- oder Notstop-Befehls vorgesehen ist. Das Schalt- oder Sensorelement 28 ist in Fig 3 bis 7 angedeutet und stellt eine besondere Ausführungsform dar. In dieser Weiterbildung ist es vorteilhaft, dass die Befehlseingabe für eine Ausnahmesituation in die Steuerung 3 der Maschine 2 entkoppelt wird von den zumindest zwei Betätigungsabschnitten 14, 15 an der Mantelfläche 11. Durch die kompakte Bauweise des Drehrads 10, welches nur eine gemeinsame Drehachse 25, ist eine Verschiebung des Drehrads 10 entlang seiner Rotationsachse 12 sehr einfach vom Maschinenbediener 5 durchführbar. Die Position der Krafteinleitung am Drehrad 10 ist daher für die Verschiebung von untergeordneter Rolle. Im Grenzfall kann diese sogar durch einen Schlag des Maschinenbedieners 5 auf das Drehrad 10 erfolgen, damit eine Verschiebung in Richtung der Rotationsachse 12 eingeleitet wird. Das Schalt- oder Sensorelement 28, welches zur Signalisierung eines "Schnellstop-" oder "Notstop-Befehls" an die Steuerung 3 der Maschine 2 vorgesehen ist, kann im Bedienelement 4 bzw. Bedienelementkörper 7 sehr einfach und robust verbaut werden. Dies stellt eine kostengünstige und sehr sichere Bauweise dar. Es kann auch vorgesehen sein, dass das Drehrad 10 nach der Verschiebung entlang der Rotationsachse 12in seiner Position arretiert wird. Eine Drehbewegung des Drehrads 10 oder auch eine Befehlseingabe durch Verschieben der Hand 6 bzw. der Finger des Maschinenbedieners 5 wird dadurch blockiert. Das Lösen des Drehrads 10 kann in diesem Fall erst nach einer Quittierung des "Schnellstop-" oder "Notstopf-Befehls" erfolgen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Fertigungsanlage | 31 | zusätzlicher/vierter Sensorbereich |
| 2 | Maschine | 32 | zusätzlicher/vierter Sensorelement |
| 3 | Steuerung | | |
| 4 | Bedienelement | | |
| 5 | Maschinenbediener | | |
| 6 | Hand | | |
| 7 | Bedienelementkörper | | |
| 8 | Anzeigedisplay | | |
| 9 | Drucktaste | | |
| 10 | Drehrad | | |
| 11 | Mantelfläche | | |
| 12 | Rotationsachse | | |
| 13 | lokaler Durchmessermittelwert | | |
| 14 | erster Betätigungsabschnitt | | |
| 15 | zweiter Betätigungsabschnitt | | |
| 16 | dritter Betätigungsabschnitt | | |
| 17 | Oberflächenstrukturierung | | |
| 18 | erster Sensorbereich | | |
| 19 | zweiter Sensorbereich | | |
| 20 | dritter Sensorbereich | | |
| 21 | erstes Sensorelement | | |
| 22 | zweites Sensorelement | | |
| 23 | drittes Sensorelement | | |
| 24 | Umfangsrichtung | | |
| 25 | Drehachse | | |
| 26 | Erhebung | | |
| 27 | Vertiefung | | |
| 28 | Schalt- oder Sensorelement | | |
| 29 | Greifbereich | | |
| 30 | Stirnseite | | |

## Patentansprüche

1. Bedienelement (4) für eine elektrisch gesteuerte Maschine (2), mit einem Bedienelementkörper (7) und einem Drehrad (10) zum Eingeben eines Befehls in eine Steuerung (3) der Maschine (2), wobei das Drehrad (10) um eine Rotationsachse (12) drehbar am Bedienelementkörper (7) angeordnet ist und von einer Mantelfläche (11) umgeben ist, welche einen in Normalrichtung auf die Rotationsachse (12) vorgegebenen lokalen Durchmessermittelwert (13) aufweist, an welcher Mantelfläche (11) das Drehrad (10) von einem Maschinenbediener (5) ergreif- und verdrehbar ist, und wobei die Mantelfläche (11) des Drehrades (10) zumindest zwei Betätigungsabschnitte (14, 15) mit unterschiedlichen Oberflächenstrukturierungen (17) aufweist, wobei zumindest einem der Betätigungsabschnitte (14, 15) ein Sensorbereich (18, 19) eines Sensorelements (21, 22) zugeordnet ist, und wobei zumindest einem der Betätigungsabschnitte (14, 15) unterschiedliche Maschinenfunktionen zur Eingabe von zumindest einem Befehl in die Steuerung (3) zugeordnet sind, **dadurch gekennzeichnet, dass** die zumindest zwei Betätigungsabschnitte (14, 15) mit unterschiedlichen Oberflächenstrukturierungen (17) derart an der Mantelfläche (11) des Drehrads (10) angeordnet sind, dass sie vom Maschinenbediener (5), zur Eingabe eines Befehls in die Steuerung (3) im Normalbetrieb durch axiales Verschieben mit einer Hand (6) und/oder deren Finger erfassbar sind, und dass zumindest ein Betätigungsabschnitt (14, 15) an einer Stirnseite ein drucksensitives Sensorelement (22, 32) zur Eingabe eines Stop-Befehls aufweist, welches drucksensitive Sensorelement (22, 32) derart angeordnet ist, dass dessen Sensorbereich (19, 31) im Wesentlichen in Richtung der Rotationsachse (12) ausgerichtet ist.

2. Bedienelement (4) nach Anspruch 1, **dadurch gekennzeichnet, dass** die zumindest zwei unterschiedlichen Oberflächenstrukturierungen (17) aufweisende Betätigungsabschnitte (14, 15) in Richtung der Rotationsachse (12) voneinander beabstandet angeordnet sind und vollumfänglich in Umfangsrichtung (24) des jeweiligen Sensorbereichs (18) an der Mantelfläche (11) ausgebildet sind.

3. Bedienelement (4) nach Anspruch 1 oder 2, **dadurch gekennzeichnet, dass** die zumindest zwei Betätigungsabschnitte (14, 15) des Drehrades (10) über eine gemeinsame Drehachse (25) gegenüber dem Bedienelementkörper (7) verdrehbar gelagert sind.

4. Bedienelement (4) nach einem der vorigen Ansprüche, **dadurch gekennzeichnet, dass** das Drehrad (10) in dessen Grundkontur rotationssymmetrisch, insbesondere zylindrisch, ausgebildet ist und der lokale Durchmessermittelwert (13) der Mantelfläche (11) zwischen 20mm und 80mm, insbesondere zwischen 35mm und 60mm, bevorzugt zwischen 40mm und 50mm aufweist.

5. Bedienelement (4) nach Anspruch 4, **dadurch gekennzeichnet, dass** zumindest einer der Betätigungsabschnitte (14, 15) entlang der Rotationsachse (12) unterschiedliche, insbesondere kontinuierlich und/oder diskontinuierlich zu- und/oder abnehmende lokale Durchmessermittelwert (13) der Mantelfläche (11) aufweist.

6. Bedienelement (4) nach einem der vorigen Ansprüche, **dadurch gekennzeichnet, dass** die Oberflächenstrukturierung (17) zumindest eines der Betätigungsabschnitte (14, 15) runde und/oder längsgestreckte Erhebungen (26), wie z.B. Stege, Noppen, Pyramiden, und/oder Vertiefungen (27), wie z.B. Rillen, Nuten, Dellen, Waben, Dimples, Grübchen, gegenüber dem lokalen Durchmessermittelwert (13) der Mantelfläche (11) aufweist.

7. Bedienelement (4) nach Anspruch 6, **dadurch gekennzeichnet, dass** die längsgestreckten Erhebungen (26) und/oder Vertiefungen (27) ein Verhältnis einer größeren Ausdehnung zu einer kürzeren Ausdehnung der Erhebungen (26), respektive der Vertiefungen (27), an der Mantelfläche (11) von größer als 1,5, bevorzugt größer 5, aufweisen.

8. Bedienelement (4) nach einem der vorigen Ansprüche, **dadurch gekennzeichnet, dass** die Oberflächenstrukturierung (17) zumindest eines der Betätigungsabschnitte (14, 15) gleichmäßig über die Mantelfläche (11) des jeweiligen Betätigungsabschnitts (14, 15) ausgebildet ist.

9. Bedienelement (4) nach einem der vorigen Ansprüche, **dadurch gekennzeichnet, dass** die Oberflächenstrukturierung (17) zumindest eines der Betätigungsabschnitte (14, 15) in zumindest eine Richtung, bevorzugt in Umfangsrichtung (24), symmetrisch über die Mantelfläche (11) des jeweiligen Betätigungsabschnitts (14, 15) ausgebildet ist.

10. Bedienelement (4) nach einem der Ansprüche 1 bis 7, **dadurch gekennzeichnet, dass** die Oberflächenstrukturierung (17) zumindest eines der Betätigungsabschnitte (14, 15) unregelmäßig über die Mantelfläche (11) des jeweiligen Betätigungsabschnitts (14, 15) ausgebildet ist.

11. Bedienelement (4) nach einem der Ansprüche 6 bis 10, **dadurch gekennzeichnet, dass** die Oberflächenstrukturierung (17) zumindest eines der Betätigungsabschnitte (14, 15) ein Verhältnis der Abweichung der größten Erhebung (26) und/oder niedrigsten Vertiefung (27) der Mantelfläche (11) in Normalrichtung zur Rotationsachse (12) zum lokalen Durchmessermittelwert (13) von größer als 0,001, bevorzugt 0,005, besonders bevorzugt größer als 0,01 aufweist.

12. Bedienelement (4) nach einem der vorigen Ansprüche, **dadurch gekennzeichnet, dass** die Mantelfläche (11) zumindest eines der Betätigungsabschnitte (14, 15) überwiegend aus Metall besteht.

13. Bedienelement (4) nach einem der vorigen Ansprüche, **dadurch gekennzeichnet, dass** die Oberflächenstrukturierung (17) zumindest eines der Betätigungsabschnitte (14, 15) zumindest teilweise ein zweites Material, vorzugsweise Kunststoff, aufweist.

14. Bedienelement (4) nach einem der vorhergehenden Ansprüche, **dadurch gekennzeichnet, dass** einem ersten, zweiten und/oder zusätzlichen Betätigungsabschnitt (14, 15, 16, 29) jeweils eine Maschinenfunktion ausgewählt aus der Gruppe Bearbeitungsvorschub, Spindeldrehzahl, Leergang-Vorschub, axiale Zustellung, radiale Zustellung, Werkzeugwechsel zugeordnet sind.

15. Verfahren zur Eingabe eines Befehls in die Steuerung (3) einer elektrisch gesteuerten Maschine (2) unter Verwendung eines Bedienelementkörpers (7) und einem um eine Rotationsachse (12) drehbar am Bedienelementkörper (7) angeordneten Drehrads (10), welches von einer Mantelfläche (11) umgeben ist, welche einen in Normalrichtung auf die Rotationsachse (12) vorgegebenen lokalen Durchmessermittelwert (13) aufweist, an welcher Mantelfläche (11) das Drehrad (10) von einem Maschinenbediener (5) ergreif- und verdrehbar ist, und wobei die Mantelfläche (11) des Drehrades (10) zumindest zwei Betätigungsabschnitte (14, 15) mit unterschiedlichen Oberflächenstrukturierungen (17) aufweist, wobei zumindest einem der Betätigungsabschnitte (14, 15) ein Sensorbereich (18, 19) eines Sensorelements (21, 22) zugeordnet ist, und wobei zumindest einem der Betätigungsabschnitte (14, 15) unterschiedliche Maschinenfunktionen zur Eingabe von zumindest einem Befehl in die Steuerung (3) zugeordnet sind, und wobei die zumindest zwei Betätigungsabschnitte (14, 15) derart an der Mantelfläche (11) des Drehrads (10) angeordnet sind, dass sie vom Maschinenbediener (5), zur Eingabe eines Befehls in die Steuerung (3) im Normalbetrieb durch axiales Verschieben mit einer Hand (6) und/oder deren Finger erfassbar sind, und wobei zumindest ein Betätigungsabschnitt (14, 15) an einer Stirnseite ein drucksensitives Sensorelement (22, 32) zur Eingabe eines Stop-Befehls aufweist, welches drucksensitive Sensorelement (22, 32) derart angeordnet ist, dass dessen Sensorbereich (19, 31) im Wesentlichen in Richtung der Rotationsachse (12) ausgerichtet ist,
umfassend die Verfahrensschritte:
- Greifen des Drehrades (10) des Bedienelementes (4) in zumindest einem der Betätigungsabschnitte (14,15) mittels der Hand (6) eines Maschinenbedieners (5);
- Auswahl von Parametern durch Drehen des Drehrades (10) des Bedienelementes (4) bezüglich seiner Rotationsachse (12);
- Eingeben von Befehlen in die Steuerung (3) der Maschine (2) durch axiales Verschieben der Hand (6) des Maschinenbedieners (5) relativ zum Drehrad (10), sodass die Hand (6) des Maschinenbedieners (5) von einem der Sensorbereiche (18, 19) in einen anderen Sensorbereich (18, 19) gleitet und vom jeweils betroffenen Sensorelement (21, 22) detektiert und dadurch der Befehl eingegeben wird;
- optional Eingabe eines Stop-Befehls durch Betätigen des drucksensitiven Sensorelements (32) durch Ausübung einer Kraft im Falle eines Ausnahmezustands.

## Claims

1. An operating element (4) for an electrically controlled machine (2), having an operating element body (7) and a rotating wheel (10) for inputting a command into a controller (3) of the machine (2), wherein the rotating wheel (10) is arranged on the operating element body (7) in a rotatable manner about a rotational axis (12) and is surrounded by a lateral surface (11) that has local diameter mean value (13) specified in the perpendicular direction to the rotational axis (12), on which lateral surface (11) the rotating wheel (10) may be gripped and rotated by a machine operator (5), and wherein the lateral surface (11) of the rotating wheel (10) has at least two actuation portions (14, 15) with different surface structures (17), wherein a sensor region (18, 19) of a sensor element (21, 22) is associated with at least one of the actuation portions (14, 15), and wherein different machine functions for inputting at least one command into the controller (3) are associated with at least one of the actuation portions (14, 15), **characterized in that** the at least two actuation portions (14, 15) with different surface structures (17) are arranged on the lateral surface (11) of the rotating wheel (10) in such a way that the machine operator (5) may grip them with a hand (6) and/or fingers of the hand for inputting a command into the controller (3) in normal operating mode by axial movement, and that at least one actuation portion (14, 15) on a front side comprises a pressure-sensitive sensor element (22, 32) for inputting a stop command, the pressure-sensitive sensor element (22, 32) being arranged such that its sensor region (19, 31) is essentially directed towards the rotational axis (12).

2. The operating element (4) according to claim 1, **characterized in that** the actuation portions (14, 15) having at least two different surface structures (17) are arranged at a distance from one another in the direction of the rotational axis (12) and are entirely formed on the lateral surface (11) in the circumferential direction (24) of the respective sensor region (18).

3. The operating element (4) according to claim 1 or 2, **characterized in that** the at least two actuation portions (14, 15) of the rotating wheel (10) are mounted rotatably about a common axis of rotation (25) relative to the operating element body (7).

4. The operating element (4) according to one of the preceding claims, **characterized in that** the rotating wheel (10) is formed rotationally symmetrical, in particular cylindrical, in its basic contour and the local diameter mean value (13) of the lateral surface (11) amounts to between 20mm and 80mm, in particular between 35mm and 60mm, preferably between 40mm and 50mm.

5. The operating element (4) according to claim 4, **characterized in that** at least one of the actuation portions (14, 15) has different, in particular continuously and/or discontinuously increasing and/or decreasing local diameter mean values (13) of the lateral surface (11) along the rotational axis (12).

6. The operating element (4) according to one of the preceding claims, **characterized in that** the surface structure (17) of at least one of the actuation portions (14, 15) comprises round and/or longitudinally extended elevations (26), such as bridges, knobs, pyramids, and/or recesses (27), such as rills, grooves, dents, honeycombs, dimples, small pits, in relation to the local diameter mean value (13) of the lateral surface (11).

7. The operating element (4) according to claim 6, **characterized in that** the longitudinally extended elevations (26) and/or recesses (27) have a proportion of a larger extension to a shorter extension of the elevations (26), or the recesses (27) respectively, on the lateral surface (11) of larger than 1.5, preferably larger than 5.

8. The operating element (4) according to one of the preceding claims, **characterized in that** the surface structure (17) of at least one of the actuation portions (14, 15) is formed evenly across the lateral surface (11) of the respective actuation portion (14, 15).

9. The operating element (4) according to one of the preceding claims, **characterized in that** the surface structure (17) of at least one of the actuation portions (14, 15) is formed symmetrically in at least one direction, preferably in the circumferential direction (24), across the lateral surface (11) of the respective actuation portion (14, 15).

10. The operating element (4) according to one of claims 1 through 7, **characterized in that** the surface structure (17) of at least one of the actuation portions (14, 15) is formed irregularly across the lateral surface (11) of the respective actuation portion (14, 15).

11. The operating element (4) according to one of claims 6 through 10, **characterized in that** the surface structure (17) of at least one of the actuation portions (14, 15) has a proportion of the deviation of the highest elevation (26) and/or lowest recess (27) of the lateral surface (11) in perpendicular direction to the rotational axis (12) to the local diameter mean value (13) of larger than 0.001, preferably 0.005, more preferably of larger than 0.01.

12. The operating element (4) according to one of the preceding claims, **characterized in that** the lateral surface (11) of at least one of the actuation portions (14, 15) consists predominantly of metal.

13. The operating element (4) according to one of the preceding claims, **characterized in that** the surface structure (17) of at least one of the actuation portions (14, 15) at least partially comprises a second material, preferably a plastic material.

14. The operating element (4) according to one of the preceding claims, **characterized in that** a first, second and/or additional actuation portion (14, 15, 16, 29) is respectively associated with a machine function selected from the group working feed, spindle speed, no-load feed, axial infeed, radial infeed, tool change.

15. A method for inputting a command into the controller (3) of an electrically controlled machine (2) using an operating element body (7) and a rotating wheel (10) that is arranged on the operating element body (7) in a rotatable manner about a rotational axis (12), the rotating wheel (10) being surrounded by a lateral surface (11) that has local diameter mean value (13) specified in the perpendicular direction to the rotational axis (12), on which lateral surface (11) the rotating wheel (10) may be gripped and rotated by a machine operator (5), and wherein the lateral surface (11) of the rotating wheel (10) has at least two actuation portions (14, 15) with different surface structures (17), wherein a sensor region (18, 19) of a sensor element (21, 22) is associated with at least one of the actuation portions (14, 15), and wherein different machine functions for inputting at least one command into the controller (3) are associated with at least one of the actuation portions (14, 15), and wherein the at least two actuation portions (14, 15) are arranged on the lateral surface (11) of the rotating wheel (10) in such a way that the machine operator (5) may grip them with a hand (6) and/or fingers of the hand for inputting a command into the controller (3) in normal operating mode by axial movement and wherein at least one actuation portion (14, 15) on a front side comprises a pressure-sensitive sensor element (22, 32) for inputting a stop command, the pressure-sensitive sensor element (22, 32) being arranged such that its sensor region (19, 31) is essentially directed towards the rotational axis (12),
comprising the method steps:
- gripping the rotating wheel (10) of the operating element (4) in at least one of the actuation portions (14, 15) by means of the hand (6) of a machine operator (5);
- selection of parameters by turning the rotating wheel (10) of the operating element (4) about its rotational axis (12);
- inputting commands into the controller (3) of the machine (2) by axial movement of the hand (6) of the machine operator (5) in relation to the rotating wheel (10), such that the hand (6) of the machine operator (5) slides from one of the sensor regions (18, 19) into another sensor region (18, 19) and is detected by the respectively concerned sensor element (21, 22) and the command is thereby input;
- optional inputting of a stop command by actuating the pressure-sensitive sensor element (32) by exertion of a force in case of a state of exception.

## Revendications

1. Élément de commande (4) pour une machine contrôlée électriquement (2), avec un corps d'élément de commande (7) et une molette (10) pour l'entrée d'un ordre dans une commande (3) de la machine (2), dans lequel la molette (10) est disposée de manière rotative autour d'un axe de rotation (12) sur le corps d'élément de commande (7) et est entourée par une surface d'enveloppe (11) qui comprend une valeur moyenne de diamètre locale (13) prédéterminée dans la direction normale par rapport à l'axe de rotation (12), et sur cette surface d'enveloppe (11), la molette (10) peut être saisie et tournée par un opérateur de la machine (5) et dans lequel la surface d'enveloppe (11) de la molette (10) comprend au moins deux portions d'actionnement (14, 15) avec des textures de surfaces différentes (17), dans lequel, à au moins une des portions d'actionnement (14, 15) correspond une zone de capteur (18, 19) d'un élément de capteur (21, 22) et dans lequel, à au moins une des portions d'actionnement (14, 15) correspondent différentes fonctions de la machine pour l'entrée d'au moins un ordre dans la commande (3), **caractérisé en ce que** les au moins deux portions d'actionnement (14, 15) avec des textures de surfaces (17) différentes sont disposées sur la surface d'enveloppe (11) de la molette (10) de façon à ce qu'elles puissent être saisies par l'opérateur de la machine (5) avec une main (6) et/ou ses doigts pour l'entrée d'un ordre dans la commande (3) en fonctionnement normal par déplacement axial, et **en ce qu'**au moins une portion d'actionnement (14, 15) comprend, au niveau d'une face frontale, d'un élément de capteur sensible à la pression (22, 32) pour l'entrée d'un ordre d'arrêt, cet élément de capteur sensible à la pression (22, 32) étant disposé de façon à ce que sa zone de capteur (19, 31) soit orientée globalement dans la direction de l'axe de rotation (12).

2. Élément de commande (4) selon la revendication 1, **caractérisé en ce que** les au moins deux portions d'actionnement (14, 15) comprenant des textures de surfaces (17) différentes sont disposées de manière distante entre elles dans la direction de l'axe de rotation (12) et sont réalisées sur toute la circonférence (24) de la zone de capteur (18) correspondante sur la surface d'enveloppe (11).

3. Élément de commande (4) selon la revendication 1 ou 2, **caractérisé en ce que** les au moins deux portions d'actionnement (14, 15) de la molette (10) sont logées de manière rotative par rapport au corps de l'élément de commande (7), par l'intermédiaire d'un axe de rotation (25).

4. Élément de commande (4) selon l'une des revendications précédentes, **caractérisé en ce que** la molette (10) est réalisée, en ce qui concerne son contour de base, de manière symétrique en rotation, plus particulièrement cylindrique et la valeur moyenne du diamètre local (13) de la surface d'enveloppe (11) est entre 20 mm et 80 mm, plus particulièrement entre 35 mm et 60 mm, de préférence entre 40 mm et 50 mm.

5. Élément de commande (4) selon la revendication 4, **caractérisé en ce qu'**au moins une des portions d'actionnement (14, 15) présente, le long de l'axe de rotation (12), différentes valeurs moyennes de diamètre locales (13), plus particulièrement augmentant ou diminuant de manière continue et/ou discontinue, de la surface d'enveloppe (11).

6. Élément de commande (4) selon l'une des revendications précédentes, **caractérisé en ce que** la texture de surface (17) d'au moins une des portions d'actionnement (14, 15) comprend des bossages ronds et/ou allongés (26) comme des nervures, des picots, des pyramides et/ou des creux (27), comme des gorges, des rainures, des fossettes, des alvéoles, des dépressions, des microcuvettes, par rapport à la valeur moyenne locale du diamètre (13) de la surface d'enveloppe (11).

7. Élément de commande (4) selon la revendication 6, **caractérisé en ce que** les bossages allongés (26) et/ou les creux (27) présentent un rapport entre une extension longueur et une extension courte des bossages (26), respectivement des creux (27), sur la surface d'enveloppe (11), inférieur à 1,5, de préférence supérieur à 5.

8. Élément de commande (4) selon l'une des revendications précédentes, **caractérisé en ce que** la texture de surface (17) d'au moins une des portions d'actionnement (14, 15) est réalisée uniformément sur la surface d'enveloppe (11) de la portion d'actionnement (14, 15) correspondante.

9. Élément de commande (4) selon l'une des revendications précédentes, **caractérisé en ce que** la texture de surface (17) d'au moins une des portions d'actionnement (14, 15) est réalisée dans au moins une direction, de préférence dans la direction circonférentielle (24), de manière symétrique sur la surface d'enveloppe (11) de la portion d'actionnement (14, 15) correspondante.

10. Élément de commande (4) selon l'une des revendications 1 à 7, **caractérisé en ce que** la texture de surface (17) d'au moins une des portions d'actionnement (14, 15) est réalisée de manière irrégulière sur la surface d'enveloppe (11) de la portion d'actionnement (14, 15) correspondante.

11. Élément de commande (4) selon l'une des revendications 6 à 10, **caractérisé en ce que** la texture de surface (17) d'au moins une des portions d'actionnement (14, 15) présente un rapport entre l'écart du bossage (26) le plus gros et/ou le creux (27) le plus bas de la surface d'enveloppe (11) dans la direction normale par rapport à l'axe de rotation (12), et la valeur moyenne locale du diamètre (13), supérieur à 0,001, de préférence 0,005, plus particulièrement supérieur à 0,01.

12. Élément de commande (4) selon l'une des revendications précédentes, **caractérisé en ce que** la surface d'enveloppe (11) d'au moins une des portions d'actionnement (14, 15) est constituée majoritairement de métal.

13. Élément de commande (4) selon l'une des revendications précédentes, **caractérisé en ce que** la texture de surface (17) d'au moins une des portions d'actionnement (14, 15) comprend au moins partiellement un deuxième matériau, de préférence une matière plastique.

14. Élément de commande (4) selon l'une des revendications précédentes, **caractérisé en ce que**, à une première, une deuxième et/ou à une portion d'actionnement (14, 15, 16, 29) supplémentaire, correspondent chacune une fonction de la machine sélectionnée dans le groupe constitué d'une avance d'usinage, d'une vitesse de rotation de broche, d'une avance à vide, d'une avance axiale, d'une avance radiale, d'un changement d'outil.

15. Procédé d'entrée d'un ordre dans la commande (3) d'une machine contrôlée électriquement (2), à l'aide d'un corps d'élément de commande (7) et d'une molette (10) disposée de manière rotative autour d'un axe de rotation (12) sur le corps d'élément de commande (7), qui est entourée d'une surface d'enveloppe (11) qui présente une valeur moyenne locale de diamètre (13) prédéterminée dans une direction normale par rapport à l'axe de rotation (12), et au niveau de cette surface d'enveloppe (11), la molette (10) peut être saisie et tournée par un opérateur de la machine (5) et dans lequel la surface d'enveloppe (11) de la molette (10) comprend au moins deux portions d'actionnement (14, 15) avec des textures de surfaces (17) différentes, dans lequel, à au moins une des portions d'actionnement (14, 15), correspond une zone de capteur (18, 19) d'un élément de capteur (21, 22) et dans lequel, à au moins une des portions d'actionnement (14, 15) correspondent différentes fonctions de la machine pour l'entrée d'au moins un ordre dans la commande (3), et dans lequel les au moins deux portions d'actionnement (14, 15) sont disposées sur la surface d'enveloppe (11) de la molette (10) de façon à pouvoir être saisies par l'opérateur de la machine (5) avec une main (6) et/ou les doigts, pour l'entrée d'un ordre dans la commande (3) en fonctionnement normal par un déplacement axial et dans lequel au moins une portion d'actionnement (14, 15) comprend, sur une face frontale, un élément de capteur sensible à la pression (22, 32) pour l'entrée d'un ordre d'arrêt, cet élément de capteur sensible à la pression (22, 32) étant disposée de façon à ce que sa zone de capteur (19, 31) soit orientée globalement dans la direction de l'axe de rotation (12),
comprenant les étapes suivantes :
- préhension de la molette (10) de l'élément de commande (4) au niveau d'au moins une des portions d'actionnement (14, 15) au moyen de la main (6) d'un opérateur de la machine (5) ;
- sélection de paramètres par la rotation de la molette (10) de l'élément de commande (4) par rapport à son axe de rotation (12) ;
- entrée d'ordres dans la commande (3) de la machine (2) par déplacement axial de la main (6) de l'opérateur de la machine (5) par rapport à la molette (10), de façon à ce que la main (6) de l'opérateur de la machine (5) glisse d'une des zones de capteur (18, 19) vers une autre zone de capteur (18, 19) et soit détectée par l'élément de capteur (21, 22) correspondant et de façon à ce que l'ordre soit entré ;
- en option, entrée d'un ordre d'arrêt par l'actionnement de l'élément de capteur sensible à la pression (32) par l'application d'une force dans le cas d'un état d'exception.
